# EUROPÄISCHE PATENTSCHRIFT

(11) **EP 0 425 994 B1**
(45) Veröffentlichungstag und Bekanntmachung des Hinweises auf die Patenterteilung: **14.12.1994**
(21) Anmeldenummer: 90120385.1
(22) Anmeldetag: 24.10.1990
(51) Int. Cl.: B23B 5/16, B23D 21/04

(54) **Verfahren und Maschine zum Abstechen von Rohren und gegebenenfalls Anfasen der hierbei gebildeten Rohrstirnkanten**
Method and machine for cutting off tubes and at the same time chamferring the formed tube ends
Méthode et machine à tronçonner des tubes et à chamfreiner les extrémités ainsi obtenues

(30) Priorität: 31.10.1989 DE 3936176; 27.06.1990 DE 4020436; 27.06.1990 DE 4020437
(43) Veröffentlichungstag der Anmeldung: 08.05.1991
(73) Patentinhaber: MASCHINENFABRIK REIKA-WERK GmbH, D-58099 Hagen (DE)
(72) Erfinder: Braun, Hans, W-5800 Hagen-Kabel (DE); Mohn, Gerhard, W-5275 Bergneustadt (DE)
(74) Vertreter: Rehders, Jochen, Dipl.-Ing.

(56) Entgegenhaltungen:
- DE-A- 2 015 795
- FR-A- 2 581 330
- US-A- 3 724 303

## Beschreibung

Die Erfindung betrifft eine Maschine zum Abstechen von Rohren und Anfasen der hierbei gebildeten Rohrstirnkanten mit einem Abstechkopf zum Einspannen eines Rohrendes aus einer mittels einer ringförmigen Hydraulik-Kolben-Zylinder-Einheit axial verschiebbaren Druckhülse mit radialen Keilflächen und darin konzentrisch angeordneten, axial unverschiebbaren, mittels komplementärer Keilflächen radial zustellbaren Spannbacken, mit einer drehbaren, mit einem Drehantrieb gekuppelten Planscheibe zur Aufnahme von wenigstens zwei radial gegenüberliegenden und radial zustellbaren Abstechwerkzeugen und Faswerkzeugen und mit einem Abgreifer zum Halten des abzustechenden Rohrteils aus mittels einer Hydraulik-Kolben-Zylinder-Einheit betätigbaren Spannbacken sowie ein Verfahren zum Abstechen und Anfasen von Rohren gemäß dem Oberbegriff des Anspruchs 15.

Eine derartige Maschine bzw. ein Verfahren ist in der DE-OS 36 12 960 (& FR-A-2 581 330) beschrieben. Bei dieser Maschine läßt sich die Planscheibe mittels mehrerer konzentrisch um die Achse der Druckhülse angeordneter, gehäusefester Hydraulik-Kolben-Zylinder-Einheiten axial verschieben, wobei die Kolbenstangen der Hydraulik-Kolben-Zylinder-Einheiten zwei längs verstellbare und feststellbare Anschlagringe tragen, deren Abstand zu einer Stirnwand des Zylinders sowie zu einer Wand des Gehäuses veränderbar ist. Der Antrieb der radial zustellbaren Abstechwerkzeuge und/oder ggf. Faswerkzeuge ist in der DE-OS 36 12 960 nicht im einzelnen beschrieben.

Bei diesen bekannten Maschinen bzw. Verfahren wird das Abstechen und Anfasen durchgeführt, indem ein kombiniertes Abstech- und Faswerkzeug planetenartig kreisend radial auf das Rohr zubewegt wird, eine Nut in das Rohr einsticht, bis das Rohr vollständig durchteilt ist, wonach der Fasbereich des Werkzeugs gegen die Außenkanten fährt und die Fasen anbringt. Um die Innenfasen anzubringen, werden die Rohrenden auseinanderbewegt, das Faswerkzeug wird in das Rohrinnere verfahren und die Fasen am linken Rohrende und am rechten Rohrende werden nacheinander durch gegenläufige Axialbewegungen des Faswerkzeugs hergestellt. Anschließend wird das Faswerkzeug radial wieder aus dem Rohrinneren nach außen gefahren.

Da das Abstechen und Anfasen grundsätzlich nacheinander erfolgen müssen und für das Anfasen der Rohrinnenkanten zwei gegensinnige Axialbewegungen der Rohre erforderlich sind, dauert der gesamte Bearbeitungsvorgang unnötig lange. Des weiteren führt die Axialbewegung des Faswerkzeugs beim Anfasen zu einer ungünstigen einseitigen Beanspruchung der Führungen des Faswerkzeugs.

Die Erfahrung hat ferner gezeigt, daß sich die längsverstellbaren und feststellbaren Anschlagringe auf den Kolbenstangen nur mit erheblichem Aufwand genau gleich einstellen lassen. Dies ist jedoch erforderlich, um ein Verkanten beim Verschieben der Druckhülse mittels der Hydraulik-Kolben-Zylinder-Einheiten zu vermeiden.

Schließlich lassen sich mit diesen Hydraulik-Kolben-Zylinder-Einheiten nur zwei definierte, durch Anschläge begrenzte Stellungen der Planscheibe einstellen.

Der Erfindung liegt die Aufgabe zugrunde, ein Verfahren und eine Maschine der eingangs erwähnten Art so zu verbessern, daß sich eine genaue axiale Verschiebung der Planscheibe in drei definierten Stellungen ohne Gefahr der Verkantung erreichen läßt. Zusätzlich besteht eine Teilaufgabe darin, einen Drehantrieb für die radiale Zustellung der Abstechwerkzeuge und ggf. Faswerkzeuge zu schaffen, mit dem sich unabhängig vom Durchmesser des abzustechenden Rohrs feinfühlig und genau das Abstechen und/oder das Anfasen durchführen läßt. Des weiteren soll die Möglichkeit bestehen, sehr genaue Außen- und Innenfasen an den Rohrenden zu erstellen, wobei die Bearbeitungsvorgänge zeitsparend und mit konstruktiv einfachen und problemlos zu bedienenden Mitteln erfolgen sollen. Schließlich soll auch noch ein Abgreifer geschaffen werden, mit dem ein gegenüber einem Abstechkopf zentrisches Einspannen eines Rohrendes unabhängig vom Rohrdurchmesser möglich ist. Dabei soll sich der Abgreifer leicht und mit geringem Aufwand an unterschiedliche Rohrdurchmesser und Rohrwanddicken anpassen lassen und so steuerbar sein, daß sich ein Rohrende hindurchschieben läßt oder ein kurzes abgestochenes Rohrstück nach unten herausfallen kann.

Ausgehend von dieser Aufgabenstellung wird bei einer Maschine der eingangs erwähnten Art vorgeschlagen, daß erfindungsgemäß die Planscheibe mittels einer ringförmigen Hydraulik-Kolben-Zylinder-Einheit aus einem gehäusefesten Ringkolben, einer die Planscheibe drehbar tragenden Schiebebuchse und einem axial beweglichen Anschlag konzentrisch und axial verschiebbar auf einer gehäusefesten Buchse der Hydraulik-Kolben-Zylinder-Einheit für den Abstechkopf angeordnet ist und der Drehantrieb der Planscheibe konzentrisch zueinander angeordnete, unabhängige Drehantriebe für die radiale Zustellung der Abstechwerkzeuge und Faswerkzeuge trägt.

Die ringförmige Hydraulik-Kolben-Zylinder-Einheit greift stets zentrisch an, so daß ein Verkanten bei der Betätigung nicht möglich ist. Der unabhängige Drehantrieb für die radiale Zustellung der Abstechwerkzeuge und ggf. Faswerkzeuge läßt sich auf einfache Weise so mit dem Drehantrieb für die Planscheibe in die Maschine integrieren, daß die radiale Zustellbewegung direkt aus der Drehbewegung des unabhängigen Drehantriebs abgeleitet wird, ohne daß eine Beeinflussung durch den Drehantrieb für die Planscheibe gegeben ist.

Dies läßt sich auf besonders einfache Weise erreichen, wenn die Halter für die Abstechwerkzeuge und ggf. Faswerkzeuge in radialen Führungen auf der Planscheibe angeordnet sind und Gewindespindelantriebe aufweisen, die über Kegelritzel mit Kronenrädern in Eingriff stehen, die selber mit dem Drehantrieb für die radiale Zustellen gekuppelt sind.

Um eine leichte Bauweise der Planscheibe zu erreichen, können die radialen Führungen aus nadelgelagerten Prismenführungsleisten bestehen, die in radialen Ausnehmungen der Planscheibe angeordnet sind, die selber wiederum von Zuglaschen überspannt sind. Die radialen Ausnehmungen können einseitig offen sein, ohne sich aufbiegen zu können, da diese Aufbiegung durch die Zuglaschen verhindert wird.

Um einen genauen Formschluß der Zuglaschen mit der Planscheibe zu erreichen und um gegebenenfalls das Spiel in den radialen Führungen einstellen zu können, können in Bohrungen an den Enden der Zuglaschenköpfe achsparallel zur Drehachse der Planscheibe angeordnete Spannschrauben eingreifen, deren konische Köpfe bis zum spielfreien Anliegen an den Bohrungen in den Enden der Zuglaschen gespannt werden.

Der Drehantrieb für die Planscheibe kann vorzugsweise ein im Gehäuse gelagertes, mit einem Zahnrad an der Planscheibe im Eingriff stehendes Ritzel mit einer Innenverzahnung, daß über in einem drehbaren Käfig gelagerte Planetenräder mit einem gehäusefesten Sonnenrad in Eingriff steht, aufweisen, während der Drehantrieb für die radiale Zustellung der Abstechwerkzeuge und gegebenenfalls Faswerkzeuge ein im Gehäuse gelagertes, mit einem an der Planscheibe drehbar gelagertem Zahnrad in Eingriff stehendes Ritzel mit Innenverzahnung, daß über im selben Käfig gelagerte Planetenräder mit einem drehbaren Sonnenrad in Eingriff steht, aufweisen kann, wobei das drehbare Sonnenrad von einem Servomotor in beiden Richtungen antreibbar ist und im Stillstand gebremst gehalten ist. Bei dieser Anordnung weisen die Ritzel solange dieselbe Umfangsgeschwindigkeit auf, wie beide Sonnenräder stillstehen, da sich die Planetenräder mit den Käfigen auf den Sonnenrädern abwälzen. Wird das drehbare Sonnenrad von dem Servomotor in der einen oder der anderen Richtung angetrieben, entsteht eine Relativdrehung des Antriebsritzels für die Planscheibe mit Bezug auf das Antriebsritzel für die radiale Zustellung der Abstechwerkzeuge und gegebenenfalls Faswerkzeuge, so daß über die entsprechenden Kronenräder und Kegelritzel der Gewindespindelantrieb in Drehung versetzt und damit die radiale Zustellung bewirkt wird.

Um die Zustellbewegung in der gewünschten Weise genau steuern zu können, kann der Servomotor vorzugsweise aus einem Drehstrommotor mit daran angeordnetem Inkrementalgeber bestehen. Auf diese Weise läßt sich die Winkelstellung des Servomotors genau kontrollieren und steuern.

Eine winkelgenaue Antriebsverbindung zwischen dem Servomotor und dem drehbaren Sonnenrad läßt sich vorteilhafterweise über einen Zahnriemenantrieb erreichen.

Mit jeweils einem an der Planscheibe drehbar gelagerten Antriebszahnrad für die radiale Zustellung der Abstechwerkzeuge und gegebenenfalls Faswerkzeuge kann jeweils ein Kronenrad verbunden sein, wobei jeweils paarweise radial gegenüberliegende Abstechwerkzeuge und gegebenenfalls um 90° versetzt angeordnete, paarweise gegenüberliegende Faswerkzeuge über konzentrische Kronenräder und radial entsprechend versetzte Kegelritzel durch je einen unabhängigen Drehantrieb über je ein Ritzel mit Innenverzahnung, Planetenräder und ein Sonnenrad radial zustellbar sein können.

Eine besonders einfache Bauweise der ringförmigen Hydraulik-Kolben-Zylinder-Einheit für die axiale Verstellung der Planscheibe läßt sich mit einem gehäusefesten Ringkolben und einer die Planscheibe drehbar tragenden Schiebebuchse erreichen.

Auf diese Weise läßt sich zwischen den gehäusefesten Ringkolben und der Schiebebuchse ein beweglicher, hydraulisch gesteuerter Ringkolben als verstellbarer Anschlag für die Schiebebuchse anordnen.

Das axiale Verstellen der Planscheibe mit drei definierten Positionen läßt sich vorteilhafterweise dadurch erreichen, daß die Vorder- und Rückseite des gehäusefesten Ringkolbens über Ausgänge A, B eines 4/3-Wegeventils gesteuert wird, daß die Vorderseite des beweglichen Ringkolbens mit dem Zylinderraum der Rückseite des gehäusefesten Ringkolbens in Verbindung steht und daß die Rückseite des beweglichen Ringkolbens über den Ausgang (B) eines 4/2-Wegeventils angesteuert wird, während der Ausgang (A) gesperrt ist.

Diese Ansteuerung bewirkt, daß der Weg des beweglichen Ringkolbens nach vorwärts durch einen Anschlag am gehäusefesten Ringkolben und durch einen Anschlag an der Schiebebuchse sowie der Weg nach rückwärts durch einen Anschlag an der Schiebebuchse begrenzt sind und daß der Weg der Schiebebuchse bei Anliegen des beweglichen Ringkolbens an der Schiebebuchse durch Beaufschlagung der Rückseite des beweglichen Ringkolbens auf eine Mittelstellung begrenzt ist.

Das erfindungsgemäße Verfahren ist dadurch gekennzeichnet, daß ein vom Faswerkzeug getrenntes Abstechwerkzeug verwendet wird, die sich beide gleichzeitig oder im wesentlichen gleichzeitig mit unterschiedlichen Geschwindigkeiten radial einwärts bewegen, wobei der Abstechvorgang erst nach Fertigstellung der Außenfasen beendet wird, wie bekannt, und daß zur Herstellung der Innenfasen lediglich eines der beiden Rohrenden axial bewegt wird, wonach das Faswerkzeug in den Spalt eingeführt und zunächst ohne Schneidvorschub axial in Richtung des nicht axial bewegten Rohrendes in Schneidposition gebracht wird und daß anschließend das axial bewegte Rohrende wieder bis in Schneidposition auf das Faswerkzeug zurückbewegt wird, wonach das Faswerkzeug zur Herstellung der Innenfasen radial nach auswärts bewegt wird und worauf schließlich das eine Rohrende wieder axial vom anderen weg bewegt wird zum Herausführen des Faswerkzeugs.

Vorzugsweise kann das Abstechwerkzeug während des Bewegungsablaufs der Herstellung der Innenfasen in seiner Ausgangslage verharren.

Eine vorteilhafte Weiterbildung der erfindunsgemäßen Maschine gemäß Anspruch 1 bis 14 zur Durchführung des Verfahrens gemäß Anspruch 15 und 16 ist im Anspruch 17 angegeben.

Die Rohrenden bzw. das Faswerkzeug brauchen axial nur im Eilgang bewegt zu werden und sind in ihren Endstellungen durch Anschläge fixiert, so daß kein mit großer Genauigkeit zu steuernder Vorschub erforderlich ist. Des weiteren erfolgt das Anbringen der Außenfasen bevor das Rohrende vollständig abgestochen ist, und zwar gleichzeitig an gegenüberliegenden Stirnkanten der Rohrenden, was sich günstig auf die Genauigkeit auswirkt. Zum Herstellen der Innen- und Außenfasen ist kein besonders gestalteter Formstahl erforderlich, da die Faskanten allein den Winkel der Fase bestimmen, während die Fasenbreite durch den Vorschub des Faswerkzeugs bestimmt wird. Da das Anbringen der Innenfasen im wesentlichen nur dazu dient, diesen Bereich zu entgraten, ist es bei diesem Bearbeitungsvorgang weniger wichtig, daß die Rohre bereits abgestochen sind, wenn dieser Bearbeitungsvorgang abläuft, jedoch ist hierbei die Beanspruchung des Faswerkzeugs und von dessen Führungen rein radial gerichtet, so daß das Werkzeug in Axialrichtung vorteilhafterweise nicht auf Biegung beansprucht wird.

Der gesamte Bearbeitungsvorgang läuft schneller ab als bei den bekannten Maschinen, da das Abstechen und Anfasen zum Teil gleichzeitig erfolgen und auch das Erstellen der Innenfasen an den gegenüberliegenden Rohrenden gleichzeitig durchgeführt wird.

Ein Abgreifer zum Halten eines abzustechenden Rohrteils und zum axialen Verschieben eines abgestochenen Rohrteils kann derart gestaltet sein, daß eine Hydraulik-Kolben-Zylinder-Einheit des Abgreifers an einem Gehäuse angeordnet ist und an seiner Kolbenstange eine obere Spannbacke und einen Spannkeil trägt, daß zwei weitere Spannbacken an zwei doppelarmigen, im Gehäuse schwenkbar gelagerten Hebeln angeordnet sind, und die doppelarmigen Hebel mit dem Spannteil zusammenwirken. Das Profil des Spannkeils ist vorzugsweise so gestaltet, daß es eine über den ganzen Hub der Kolbenstange stets auf denselben Mittelpunkt gerichtete Bewegung der Spannbacken bewirkt. Dieser Mittelpunkt ist gegenüber dem Mittelpunkt des Abstechkopfes koaxial ausgerichtet, und auch die drei Spannbacken des Abgreifers sind fluchtend mit den Spannbacken des Abstechkopfes ausgerichtet, so daß ein vom Abgreifer und vom Abstechkopf eingespanntes Rohr querkraftlos eingespannt ist, unabhängig davon, ob dieses Rohr eine gewisse Ovalität oder Wanddickenunterschiede aufweist. Somit können kein Springen und Klemmen beim Durchstich eintreten.

Zum Spannen von Rohren mit verhältnismäßig großer Wandstärke können die oberen Spannbacken am Ende der Kolbenstange flach und die Spannbacken auf den doppelarmigen Hebeln zylindrisch gestaltet sein. Auf diese Weise wird eine Linienberührung auf der Rohroberfläche erreicht, die gleichmäßig auf dem Rohrumfang verteilt ist und dem Umstand Rechnung trägt, daß sich die Kolbenstange gradlinig, die Spannbacken auf den doppelarmigen Hebeln jedoch auf einem Kreisbogen bewegen.

Um Deformationen beim Spannen von dünnwandigen Rohren zu vermeiden, können alle drei Spannbacken schwenkbeweglich angeordnet sein und ein dem Rohrdurchmesser entsprechendes Greifprofil aufweisen. Ist dieses Greifprofil als Kreisbogen mit demselben Durchmesser wie das zu spannende Rohr gestaltet, findet eine Flächenberührung zwischen den Spannbacken und dem zu spannenden Rohr statt, wodurch ein schonendes Einspannen des Rohres gewährleistet ist.

Um einerseits ein Durchschieben eines Rohres durch die Spannbacken des Abgreifers hindurch nach einem leichten Lüften der Spannbacken durchführen zu können, andererseits jedoch auch ein kurzes abgestochenes Rohrstück nach unten aus dem Abgreifer herausfallen lassen zu können, kann mit der Kolbenstange ein Wegaufnehmer verbunden sein, der die Hydraulik-Kolben-Zylinder-Einheit des Abgreifers entsprechend ansteuert.

Zum Anfasen der sich gegenüberliegenden, beim Abstechen gebildeten Rohrstirnkanten, insbesondere des Innenumfangs der Rohrenden, ist es erforderlich, das im Abgreifer eingespannte, abgestochene Rohrstück axial gegenüber dem im Abstechkopf eingespannten Rohr zu verschieben. Diese Verschiebung läßt sich durch eine die Bewegung des Abgreifers in Richtung der Rohrachse steuerende Anordnung von drei sich mit ihren Kolbenstangen aneinander abstützenden Hydraulik-Kolben-Zylinder-Einheiten erreichen, von denen eine doppeltwirkend ist und mit den Ausgängen A, B eines 4/3-Wegeventils verbunden ist, während die beiden anderen einfachwirkend und jeweils mit dem Ausgang A bzw. Ausgang B eines weiteren 4/3-Wegeventils verbunden sind, das in seiner Mittelstellung die Ausgänge A und B mit der Rückleitung verbindet.

Hierbei kann die doppeltwirkende Hydraulik-Kolben-Zylinder-Einheit das Ende der Kette bilden und die mittlere, einfachwirkende Hydraulik-Kolben-Zylinder-Einheit eine Rückholfeder und eine in den Zylinder der doppeltwirkenden Hydraulik-Kolben-Zylinder-einheit eintauchende Kolbenstange aufweisen.

Die Erfindung wird nachstehend anhand mehrerer in den Zeichnungen dargestellter Ausführungsbeispiele des näheren erläutert, und es zeigen:

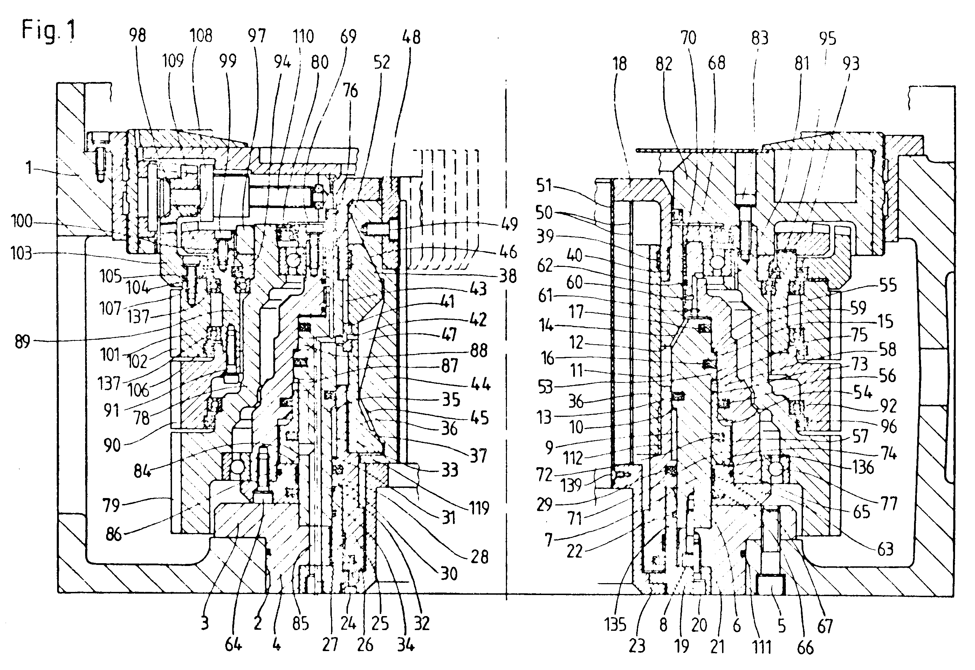

- Figur 1: einen Längsschnitt durch eine Maschine mit Abstechkopf und Planscheibe,
- Figur 2: einen Längsschnitt durch einen Antrieb für die radiale Zustellung der Abstech- und/oder Faswerkzeuge auf der Planscheibe,
- Figur 3: eine Ansicht der Planscheibe, teilweise geschnitten,
- Figur 4: einen Längsschnitt durch die Planscheibe entlang der Linie IV-IV in Figur 3,
- Figur 5: einen Längsschnitt durch die Planscheibe entlang der Linie V-V in Figur 3 und
- Figur 6: eine schematische Darstellung eines Hydraulikkreises zur Betätigung der Hydraulik-Kolben-Zylinder-Einheiten zum radialen Verschieben der Planscheibe.
- Figur 7: einen Querschnitt durch einen Abgreifer,
- Figur 8: einen Längsschnitt durch einen Abgreifer entlang der Linie A-A in Figur 7,
- Figur 9: eine schematische Darstellung der Anordnung von drei sich aneinander abstützenden Hydraulik-Kolben-Zylinder-Einheiten mit ihrer Steuerung.
- Figuren 10 bis 21: eine schematische Darstellung der einzelnen Verfahrensschritte beim Abstechen und Herstellen von Außen- und Innenfasen.

Von einer Maschine zum Abstechen von Rohren ist nur ein Teil eines Gehäuses 1 dargestellt, das in einer Bohrung 2 einen Hauptflansch 3 aufnimmt, dessen zylindrischer Ansatz 4 in der Bohrung 2 zentriert ist, während der Hauptflansch 3 mittels Befestigungsschrauben 5 mit dem Gehäuse 1 dreh- und verschiebefest verschraubt ist. Der Ansatz 4 ist in der Bohrung 2 mittels einer O-Ringdichtung 111 abgedichtet.

Der Hauptflansch 3 weist eine Eindrehung 6 auf, in die eine zylindrische Hauptbuchse 7 eingesetzt und mittels Befestigungsschrauben 8 unverdrehbar und unverschiebbar gehalten ist. Die Hauptbuchse 7 weist einen radial vorstehenden Bund 15 auf, der mit einer Hochdruckdichtung 16 einen doppelt wirkenden Ringkolben bildet. Eine innere Bohrung 9 in der Hauptbuchse 7 geht über einen Absatz 10 in eine innere Bohrung 11 kleineren Durchmessers über. Im Bereich des Absatzes 10 ist eine Hochdruckdichtung 13 angeordnet. Die Bohrung 11 endet in einem weiteren Absatz 12, von dem eine schräg angeordnete Entlüftungsbohrung 14 in einen Stirnbereich der Hauptbuchse 7 führt. In diesem Stirnbereich ist eine weitere Hochdruckdichtung 17 angeordnet. In das vordere Ende der Hauptbuchse 7 ist eine Spannmutter 18 mittels eines Gewindes 40 eingeschraubt. Ein Anschlagflansch 19 ist mittels Befestigungsschrauben 20 in einer Eindrehung 21 des zylindrischen Ansatzes 4 befestigt. Der Anschlagflansch 19 greift mit einem zylindrischen Fortsatz 135 in die Bohrung 9 der Hauptbuchse 7 ein und ist dort mittels einer O-Ringdichtung 22 abgedichtet. Am Anschlagflansch 19 ist desweiteren ein Abschlußflansch 23 mittels Befestigungsschrauben 24 befestigt.

Ein Spannkolben 25 ist mittels eines Gleitringes 27 im zylindrischen Fortsatz 135 geführt und gegenüber diesem mittels einer Hochdruckdichtung 26 abgedichtet. Ein Bund 28 am Spannkolben 25 bildet einen Ringkolben, der mittels einer Hochdruckdichtung 29 in der Bohrung 9 der Hauptbuchse 7 abgedichtet geführt ist. Der Ringkolben 28 weist eine das Spannen bewirkende Kolbenseite 30 und eine das Lösen bewirkende Kolbenseite 31 auf. Die Kolbenseite 30 ist zu einem Zylinderraum 32 und die Kolbenseite 31 zu einem Zylinderraum 33 gerichtet. Die wirksame Fläche der das Spannen bewirkenden Kolbenseite 30 ist größer als die der das Lösen bewirkenden Kolbenseite 31.

Im Bereich des Zylinderraums 32 ist eine radiale Druckölzu- und -ableitung 34 angeordnet, während im Bereich des Zylinderraums 33 eine weitere radiale Druckölzu- und -ableitung 35 angeordnet ist. Beide Leitungen 34, 35 stehen mit nicht dargestellten, getrennten axialen Leitungen in Verbindung, die durch die Hauptbuchse 7, den Hauptflansch 3 und den zylindrischen Ansatz 4 geführt sind, wie dies bezüglich einer Axialbohrung 85 dargestellt ist.

Das vordere Ende des Spannkolbens 25 ist mittels eines Gewindes 112 mit einer Druckhülse 36 verschraubt, die sich axial bis in den Bereich der Spannmutter 18 erstreckt und dort mittels eines Gleitringes 39 geführt ist. Eine mittels einer Befestigungsschraube 42 an der Druckhülse 36 befestigte Paßfeder 41 läßt eine axiale Verschiebung in einer Keilnut 43 zu, sichert aber gleichzeitig die Druckhülse 36 und den Spannkolben 25 gegen Verdrehen gegenüber der Hauptbuchse 7.

Die Druckhülse 36 weist drei gleichmäßig auf den Umfang verteilte hintere Keilflächen 37 und vordere Keilflächen 38 auf, die mit entsprechenden, komplementären hinteren Keilflächen 45 und vorderen Keilflächen 46 an drei Spannbacken 44 zusammenwirken. Zwischen der vorderen Keilfläche 46 und der hinteren Keilfläche 45 der Spannbacke 44 befindet sich ein Freiraum 47, der den axialen Abstand zwischen der hinteren Keilfläche 45 und der vorderen Keilfläche 46 bestimmt. Im Bereich der vorderen Keilfläche 46 einer jeden Spannbacke 44 ist ein auswechselbarer Spannblock 48 mittels einer Befestigungsschraube 49 befestigt. Diese Spannblöcke 48 sind in verschiedenen radialen Abmessungen vorhanden und dienen dazu, den Abstechkopf an unterschiedliche Rohrdurchmesser anzupassen. Zwischen den Spannbacken 44 sind gewölbte Spreizfederblätter 50 angeordnet, die sich an den Spannbacken 44 abstützen und diese radial nach auswärts drücken. Diese Spreizfederblätter 50 dienen als Rückholfedern für die Spannbacken 44, wenn sie durch Zurückfahren des Spannkolbens 25 und der Druckhülse 36 gelöst werden sollen. Die Spannbacken 44 sind mit geringem axialem Spiel zwischen der Spannmutter 18 und dem Abschlußflansch 23 angeordnet und stützen sich beim Spannen mit ihrer Stirnseite an der Spannmutter 18 und beim Lösen mittels eines rückwärtigen Flansches 119 am Abschlußflansch 23 ab. Die Zwischenräume zwischen den Spannbacken 44 sind mittels Schutzblechsegmente 51, die mit der Spannmutter 18 und dem Abschlußflansch 23 mittels Befestigungsschrauben 139 verschraubt sind, verschlossen. Eine Schmierölbohrung 52 führt von der hinteren Stirnseite des Anschlagflansches 19 bis in einen vorderen Bereich der Hauptbuchse 7 und von dort radial nach außen, um über Schmierölbohrungen 60 die Schmierölversorgung von auf einer Schiebebuchse 53 angeordneten Schulterkugellagern 76, 77 zu gewährleisten.

Die Schiebebuchse 53 weist einen Absatz 54 auf, der einen Zylinderraum 57 nach vorne begrenzt. Ein weiterer Absatz 55 in der Schiebebuchse 53 begrenzt einen Zylinderraum 59 für den gehäusefesten Ringkolben 15. Eine Hochdruckdichtung 56 dichtet einen Zylinderraum 58 gegenüber einem Ringkolben 71 ab, der mit seiner Innenbohrung auf der zylindrischen Hauptbuchse 7 geführt und mittels einer Hochdruckdichtung 72 abgedichtet ist. Eine O-Ringdichtung 61 sowie eine weitere, dazu axial versetzte O-Ringdichtung 62 dienen dazu, die Schmierölbohrungen 52, 60 nach außen hin abzudichten. Ein Flansch 63 ist mittels Befestigungsschrauben 64 mit der Schiebebuchse 53 verschraubt und dieser gegenüber mittels einer O-Ringdichtung 65 abgedichtet. Im Flansch 63 ist desweiteren eine Hochdruckdichtung 66 angeordnet, die die Abdichtung gegenüber der Hauptbuchse 7 übernimmt. Ein Gleitring 67 übernimmt die Führung der Hauptbuchse 7 im Flansch 63.

Am entgegengesetzten, vorderen Ende der Schiebebuchse 53 ist ein Spannring 68 mittels Befestigungsschrauben 69 verschraubt, und ein Gleitring 70 übernimmt die Führung des vorderen Endes der Schiebebuchse 53 auf der Hauptbuchse 7. Mittels des Flansches 63 und des Spannringes 68 werden die Schulterkugellager 76, 77 auf der Schiebebuchse 53 axial festgelegt und gehalten.

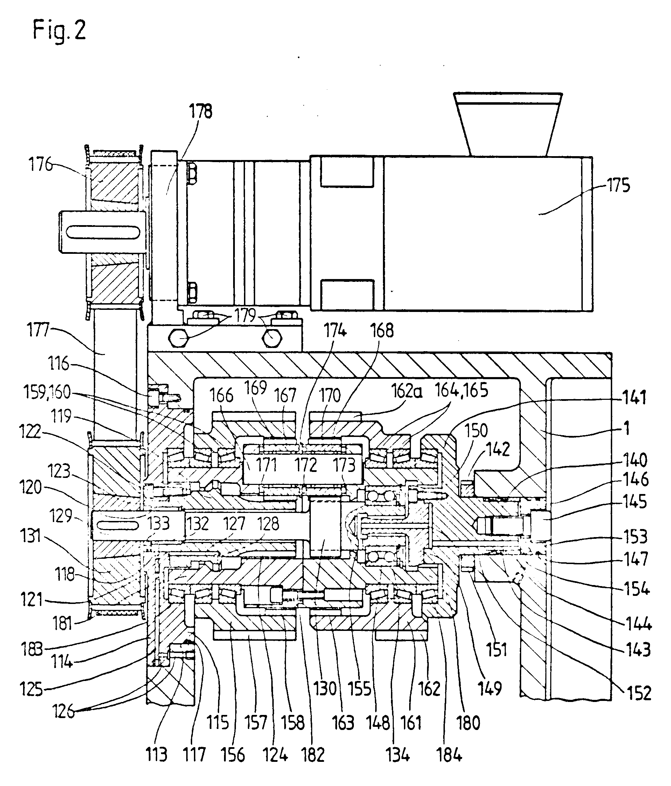

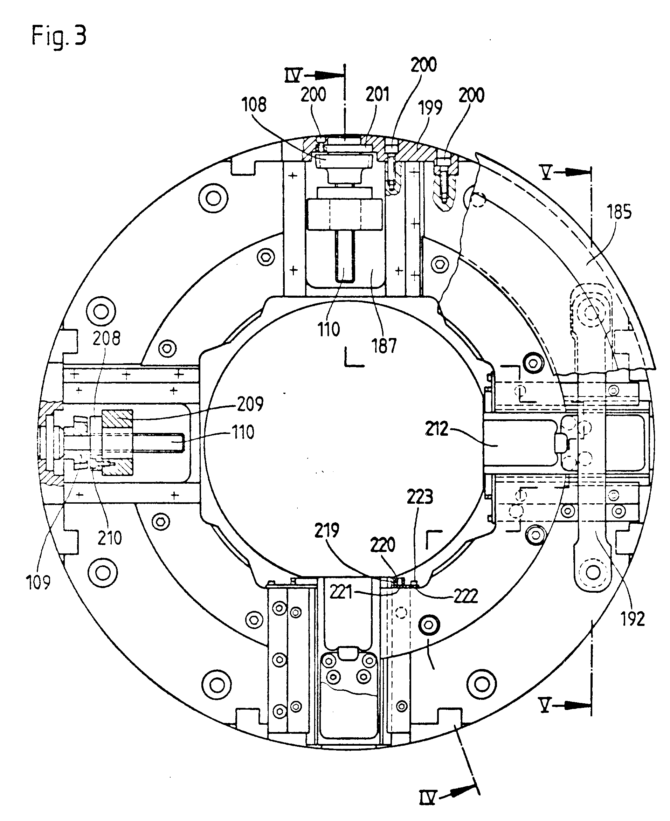

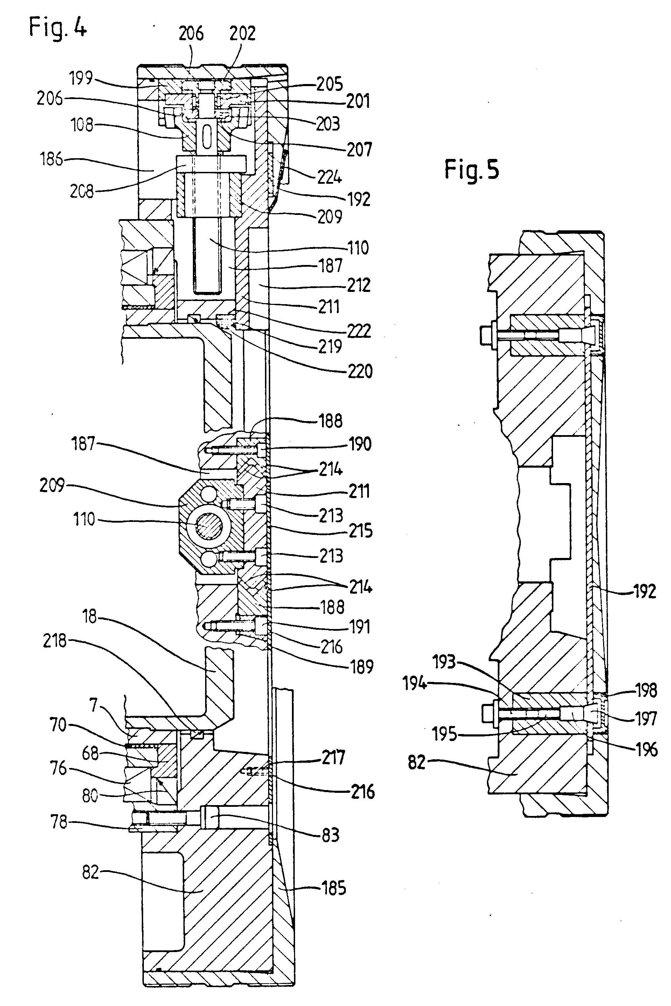

Der Ringkolben 71 weist eine Vorderseite 73 auf, die sich bis zu einem Anschlag 75 am gehäusefesten Ringkolben 15 bewegen kann. Desweiteren weist der Ringkolben 71 eine Rückseite 74 auf, deren Bewegung durch einen Anschlag 136 am Flansch 63 begrenzt ist. Mittels der Schulterkugellager 76, 77 ist eine Antriebsbuchse 78 auf der Schiebebuchse 53 drehbar gelagert. Diese Antriebsbuchse 78 ist an ihrem hinteren Ende mit einem Zahnkranz 79 versehen, in den ein nicht dargestellter Drehantrieb eingreift. Eine Radialdichtung 80 dichtet das vordere Ende der Antriebsbuchse 78 gegenüber dem Spannring 68 ab. Eine axiale Schmierölbohrung 81 in der Antriebsbuchse 78 führt Schmieröl von dem Bereich zwischen dem Schulterkugellager 76 und der Radialdichtung 80 in den Raum zwischen den beiden Schulterkugellagern 76, 77 zurück. Mit der Antriebsbuchse 78 ist eine in Figuren 3 bis 5 dargestellte Planscheibe 82 verbunden, die nicht dargestellte radial gegenüberliegende und radial zustellbare Abstechwerkzeuge und/oder gegebenenfalls Faswerkzeuge trägt. Die Planscheibe 82 ist mittels Befestigungsschrauben 83 an der Antriebsbuchse 78 befestigt. Im Ringkolben 71 ist wenigstens eine Radialbohrung 84 angeordnet, die eine Radialbohrung 86 in der Hauptbuchse 7 mit dem Zylinderraum 57 verbindet. Die Radialbohrung 86 ist über die Axialbohrung 85 zur Stirnseite des Anschlagflanschs 19 geführt und dort mit einer Druckmittelleitung verbunden. Entsprechende Radialbohrungen 87 und 88 führen zu den Zylinderräumen 58 und 59 und sind gegenüber der Axialbohrung 85 versetzt ebenfalls zum Anschlagflansch 19 geführt und dort in ebenfalls nicht dargestellter Weise mit einer Druckmittelleitung verbunden. Auf der Antriebsbuchse 78 ist ein mittlerer Steuerring 89 mit einem Zahnkranz 90, der am mittleren Steuerring 89 mittels Befestigungsschrauben 91 befestigt ist, über zwei Schulterkugellager 92, 93 drehbar gelagert. Die axiale Vorspannung der Schulterkugellager 92, 93 wird mittels eines Distanzringes 94, der an einem Bund 97 der Planscheibe 82 anliegt, eingestellt. Radialdichtringe 95, 96 sorgen für eine Abdichtung des mittleren Steuerringes 89 und dessen Zahnkranzes 90 gegenüber der Antriebsbuchse 78. An der vorderen Stirnseite des mittleren Steuerringes 89 ist ein kleines Kronenrad 98 mittels Befestigungsschrauben 99 und unter Zwischenschaltung eines Paßringes 100 befestigt. Der Paßring 100 dient dazu, das Zahnflankenspiel des kleinen Kronenrades 98 gegenüber einem kleinen Kegelritzel 109 in der Planscheibe 82 einzustellen. Auf dem mittleren Steuerring 89 ist schließlich noch ein vorderer Steuerring 101 mit einem Zahnkranz 102 über zwei weitere Schulterkugellager 137, 138 drehbar gelagert. An dem vorderen Steuerring 101 ist ein großes Kronenrad 103 mittels Befestigungsschrauben 104 und unter Zwischenschaltung eines weiteren Paßringes 105 befestigt. Das große Kronenrad 103 befindet sich in Eingriff mit einem großen Kegelritzel 108 in der Planscheibe 82. Radialdichtringe 106, 107 sorgen für eine Abdichtung des vorderen Steuerringes 101 gegenüber dem mittleren Steuerring 89. Die Zahnkränze 90, 102 befinden sich in Eingriff mit einer in Figur 2 dargestellten Antriebsvorrichtung, die es gestattet, diese Zahnkränze unabhängig voneinander relativ zum Zahnkranz 79 zu verdrehen. Diese Drehung überträgt sich über das kleine Kronenrad 98 oder das große Kronenrad 103 auf das kleine Kegelritzel 109 oder das große Kegelritzel 108, die eine Gewindespindel 110 in Drehung versetzen. Die Drehung der Gewindespindel 110 bewirkt eine radiale Verschiebung von nicht dargestellten Abstechwerkzeugen und/oder gegebenenfalls Faswerkzeugen und damit die Bearbeitung eines im Abstechkopf eingespannten Rohrendes.

Konzentrisch um die Bohrung 2 im Gehäuse 1 für den Hauptflansch 3 sind drei weitere Bohrungen 113 angeordnet, die zur Aufnahme des Drehantriebs für die Planscheibe 82 und der Drehantriebe für die radiale Zustellung der Abstech- und Anfaswerkzeuge dienen. Zu diesem Zweck ist ein Aufnahmeflansch 114 mit einem zylindrischen Ansatz 115 in die Bohrung 113 eingepaßt und mittels Befestigungsschrauben 116 befestigt. Die Abdichtung zum Gehäuseinneren erfolgt über eine O-Ringdichtung 117.

Im Aufnahmeflansch 114 ist eine zentrische Bohrung 118 angeordnet, die zur Aufnahme einer Hohlwelle 119 dient. Die Hohlwelle 119 weist einen zylindrischen Ansatz 120 auf, so daß ein Absatz 121 gebildet ist, der sich an die Innenseite des Aufnahmeflansches 114 anlehnt. Die Hohlwelle 119 ist mit Befestigungsschrauben 122 am Aufnahmeflansch 114 befestigt und gegenüber diesem mittels einer O-Ringdichtung 123 abgedichtet.

Am Aufnahmeflansch 114 abgewandten Ende weist die Hohlwelle 119 eine Verzahnung 124 auf, die ein feststehendes Sonnenrad für ein nachstehend beschriebenes Planetengetriebe bildet. Durch das Gehäuse 1 und den Aufnahmeflansch 114 sind axiale Schmierölbohrungen 126 sowie eine radiale Schmierölbohrung 125 geführt, die in eine axiale Schmierölbohrung 127 in der Hohlwelle 119 und eine radiale Schmierölbohrung 128 übergehen. Über diese Bohrungen 125, 126, 127, 128 wird Schmieröl zu Kegelrollenlagern 159, 160 geführt.

In der Hohlwelle 119 ist eine Antriebswelle 129 drehbar gelagert. An einem Ende der Antriebswelle 129 ist ein drehbares Sonnenrad 130 angeordnet, während das andere Ende der Antriebswelle 129 durch den Aufnahmeflansch 114 hindurch nach außen geführt ist und ein Zahnriemenrad 131 trägt. Im Bereich des Aufnahmeflansch 114 ist die Antriebswelle 129 in einem Nadellager 132 gelagert, das sich an der Hohlwelle 119 abstützt. Ein Radialdichtring 133 gewährleistet die Abdichtung nach außen. Am sonnenradseitigen Ende der Antriebswelle 129 ist ein doppelreihiges Schrägkugellager 134 angeordnet, das einen aus einem Teil 180 und einem Teil 181, die mittels Schrauben 182 verbunden sind, gebildeten Käfig im Planetengetriebe trägt. Dieser Käfig 180, 181 ist über ein Kegelrollenlager 183 im Aufnahmeflansch 114 und über ein Kegelrollenlager 184 in einem Flansch 141 an einem Aufnahmezapfen 140 gelagert. Der Aufnahmezapfen 140 ist in einer entsprechenden Bohrung im Gehäuse 1 mittels Ringfedern 143, einer Distanzbuchse 144, einer Abschlußscheibe 146 und einer Spannschraube 145 spielfrei gespannt, nachdem das Axialspiel der Kegelrollenlager 183, 184 mittels der einer am Gehäuse 1 abstützenden Einstellmutter 142 eingestellt wurde. Die Abschlußscheibe 146 ist mittels einer O-Ringdichtung 147 nach außen abgedichtet. In das flanschseitige Ende des Aufnahmezapfens 140 ist ein Flansch 149 einer Schmierdüse 148 eingesetzt und mittels Befestigungsschrauben 150 verschraubt. Von der Schmierdüse 148 führen Schmierölbohrungen 151, 152, 153, 154 zu einem Schmierölanschluß, von dem aus Schmieröl dem doppelreihigen Schrägkugellager 134, dem Kegelrollenlager 184 und zwei weiteren Kegelrollenlagern 164, 165 zugeführt wird. Am flanschseitigen Ende des Käfigs 181 ist ein Zahnrad 156 mittels Kegelrollenlager 159, 160 drehbar gelagert. Das Zahnrad 156 trägt eine Außenverzahnung 157 und eine Innenverzahnung 158.

Ein weiteres Zahnrad 161 mit einer Außenverzahnung 162 und einer Innenverzahnung 163 ist über zwei Kegelrollenlager 164, 165 am anderen Ende des Käfigs 180, 181 gelagert.

Da eines der beschriebenen Planetengetriebe über die Außenverzahnung 162 mit dem Zahnkranz 102 des vorderen Steuerrings 101 kämmt, während das andere Planetengetriebe mit der Außenverzahnung 162a im Eingriff mit dem Zahnkranz 90 auf dem mittleren Steuerring 89 in Eingriff steht, sind die Verzahnungen 162, 162a axial versetzt gezeichnet, sind jedoch Teil von zwei verschiedenen Planetengetrieben, von denen eines ein Zahnrad 161 mit der Verzahnung 162 und das andere ein Zahnrad 161 mit der Verzahnung 162a aufweist.

Im Käfig 180, 181 sind regelmäßig auf einem Kreis verteilt Bolzen 166 angeordnet, wobei jeweils ein Bolzen 166 axial versetzt ein Planetenrad 167 und ein Planetenrad 168 trägt. Die Planetenräder 167, 168 weisen den gleichen Durchmesser auf und sind auf den Bolzen 166 mittels Radialnadellagern 169, 170 gelagert und gegen axiales Verschieben durch Axialnadellager 171, 172, 173 gesichert. Eine Anlaufscheibe 174 ist zwischen den Zahnrädern 167 und 168 angeordnet.

Ein Drehstromservomotor 175 ist über eine Konsole 178 und mittels Befestigungsschrauben 179 am Gehäuse 1 verschraubt und trägt ein Zahnriemenrad 176, von dem eine Antriebsverbindung über einen Zahnriemen 177 zum Zahnriemenrad 131 besteht.

Wird die Planscheibe 82 über die Antriebsbuchse 78 mit dem Zahnkranz 79 mittels eines nicht dargestellten Antriebsmotors in Drehung versetzt, treibt der Zahnkranz 79 die Zahnräder 156 der beiden Planetengetriebe ebenfalls an. Über die Innenverzahnung 158 werden die Planetenräder 167 in Drehung versetzt und rollen auf dem feststehenden Sonnenrad 124 ab. Die Planetenräder 167 nehmen dabei den Bolzen 166 und den Käfig 180, 181 mit.

Solange das Sonnenrad 130 stillsteht, d.h. wenn sich der Drehstromservomotor 175 nicht dreht, sondern abgebremst ist, werden die Planetenräder 168 über den Bolzen 166 und das Gehäuse 180, 181 ebenfalls mitgenommen, rollen auf dem stillstehenden Sonnenrad 130 ab und erteilen der Innenverzahnung 163 und damit dem Zahnrad 161 dieselbe Drehgeschwindigkeit, wie sie das Zahnrad 156 durch die Antriebsbuchse 78 erhält. Es findet somit keine Relativdrehung des Zahnrades 156 gegenüber den Zahnrädern 161 statt, so daß sich der Zahnkranz 90 bzw. der Zahnkranz 102 ebenfalls relativ zum Zahnkranz 79 nicht verdrehen. In diesem Fall drehen sich das kleine Kronenrad 98 und das große Kronenrad 103 mit derselben Geschwindigkeit wie die Planscheibe 82, so daß auch keine Drehung des kleinen oder großen Kegelritzels 108, 109 erfolgt und damit keine Bewegung der Abstech- und Faswerkzeuge in radialer Richtung stattfindet.

Sobald jedoch der Drehstromservomotor 175 in Drehung versetzt wird, überlagert sich diese Drehung über das Sonnenrad 130 und die Planetenräder 168 auf das Zahnrad 161, da sich die Drehbewegung des Sonnenrades 130 zur von dem Käfig 180, 181 kommenden Drehbewegung addiert. Somit dreht sich das Zahnrad 161 je nach Drehsinn des Drehstromservomotors 175 schneller oder langsamer als das Zahnrad 156 und erteilt dem Zahnkranz 90 oder dem Zahnkranz 102 eine Relativdrehung bezüglich des Zahnkranzes 79, so daß sich das kleine Kronenrad 98 oder das große Kronenrad 103 relativ zur Planscheibe 82 verdrehen, das kleine Kegelritzel 109 oder das große Kegelritzel 108 in Drehung versetzen und damit eine Radialbewegung der Abstechwerkzeuge oder Faswerkzeuge bewirken. Da am Drehstromservomotor 175 ein im einzelnen nicht dargestellter Inkrementalgeber angeordnet ist, läßt sich die Relativdrehung des Zahnrades 161 bezüglich des Zahnrades 156 sehr genau kontrollieren und steuern, wodurch sich eine einfache Anpassung an den Durchmesser und die Wanddicke der abzustechenden Rohre erreichen läßt. Auch die Breite der mit den Faswerkzeugen erzeugten Fase läßt sich auf diese Weise sehr genau kontrollieren.

Die Planscheibe 82 mit dem Spindelantrieb für die Abstech- und Faswerkzeuge ist in Figuren 3 bis 5 im einzelnen dargestellt. Die eigentliche Planscheibe 82 ist von einer Trommel 185 umgeben. Mit dem Außenumfang ist die Trommel 185 mit geringem Spiel in eine entsprechende Gehäuseöffnung des Gehäuses 1 eingepaßt. Auf der Hinterseite der Planscheibe 82 ist eine ringförmige Ausnehmung 186 angeordnet, die mit vier unter einem Winkel von 90° zueinander angeordneten radialen Ausnehmungen 187 in Verbindung steht. Zur Vorderseite der Planscheibe 82 sind die radialen Ausnehmungen 187 erweitert und dienen zur Aufnahme von parallelen Prismenführungsleisten 188, die mittels Befestigungsschrauben 190 an der Planscheibe 82 angeschraubt sind. Ein zylindrischer Schlitten 211 ist mittels Nadelführungen 214 in den Prismenführungsleisten 188 geführt. Das Spiel der Nadelführungen 214 läßt sich durch eine keilförmige Stelleiste 189 mittels der Schrauben 191 einstellen. Jede radiale Ausnehmung 187 wird von einer Zuglasche 192 übergriffen, die dazu dient, ein Auseinanderklaffen der radialen Ausnehmungen 187 unter der Einwirkung der Fliehkräfte und der Kräfte in den Prismenführungsleisten 188 zu verhindern. Zu diesem Zweck sind in der Planscheibe 82 in entsprechenden Bohrungen Spannklötze 193 angeordnet, die mittels Befestigungsschrauben 194 mit der Planscheibe 82 verschraubt sind. In die Spannklötze 193 lassen sich Spannschrauben 195 mit einem zylindrischen Schaft 196 und einem konischen Kopf 197 hineinschrauben, bis die konischen Köpfe 197 stramm zur Anlage an entsprechenden Bohrungen in den Enden der Zuglaschen 192 kommen. Die von der Zuglasche 192 auf die Spannschrauben 195 ausgeübte Querkraft wird durch den eng in der Bohrung des Spannklotzes 193 eingepaßten zylindrischen Schaft 196 auf die Planscheibe 82 übertragen. Nach dem Anziehen werden die Köpfe 197 der Spannschrauben 195 von einer Abdeckschraube 198 verdeckt.

Jede radiale Ausnehmung 187 wird durch ein Lagersegment 199, das mittels Befestigungsschrauben 200 befestigt ist und von der Trommel 185 umfaßt wird, abgeschlossen. Von innen ist ein Lagerflansch 201 gegen das Lagersegment 199 mittels Befestigungsschrauben 204 geschraubt. Der Lagerflansch 201 dient als Lagerring für ein Radialnadellager 205. Der Innenring für dieses Radialnadellager 205 wird durch eine Lagermutter 202 gebildet, die auf das äußere Ende der Gewindespindel 110 aufgeschraubt und gegen Lösen gesichert ist. Zwischen dem Lagerflansch 201 und der Lagermutter 202 ist ein Axialnadellager 206 angeordnet. Ein entsprechendes Axialnadellager 206 ist auf der anderen Seite des Lagerflansches 201 angeordnet und wirkt mit einem Lagerring 203 zusammen. Das große Kegelritzel 108 oder das kleine Kegelritzel 109 sind mit der Gewindespindel 110 drehfest verbunden und stützen sich über das Radialnadellager 205 und die Axialnadellager 206 am Lagerflansch 201 ab.

Eine Paßscheibe 207 dient dazu, das Flankenspiel zwischen dem großen Kegelritzel 108 und dem großen Kronenrad 103 bzw. dem kleinen Kegelritzel 109 und dem kleinen Kronenrad 98 einzustellen.

Die Gewindespindel 110 wirkt mit einer Spindelmutter 208 zusammen, die mittels Befestigungsschrauben 210 mit einem Aufnahmestück 209 verbunden ist. Dieses Aufnahmestück 209 ist mittels Befestigungsschrauben 213 mit dem Schlitten 211 verschraubt und erteilt diesem eine Radialbewegung entsprechend der Drehung der Gewindespindel 110.

Jeder Schlitten 211 weist eine Ausnehmung 212 auf, in der die Abstech- bzw. Faswerkzeuge befestigt werden.

Somit wird den Schlitten 211 eine über die Drehstromservomotoren 175 und die damit verbundenen Inkrementalgeber eine genau gesteuerte Radialbewegung erteilt, wodurch ein schnelles, sauberes, genaues Bearbeiten der Rohrenden gewährleistet ist.

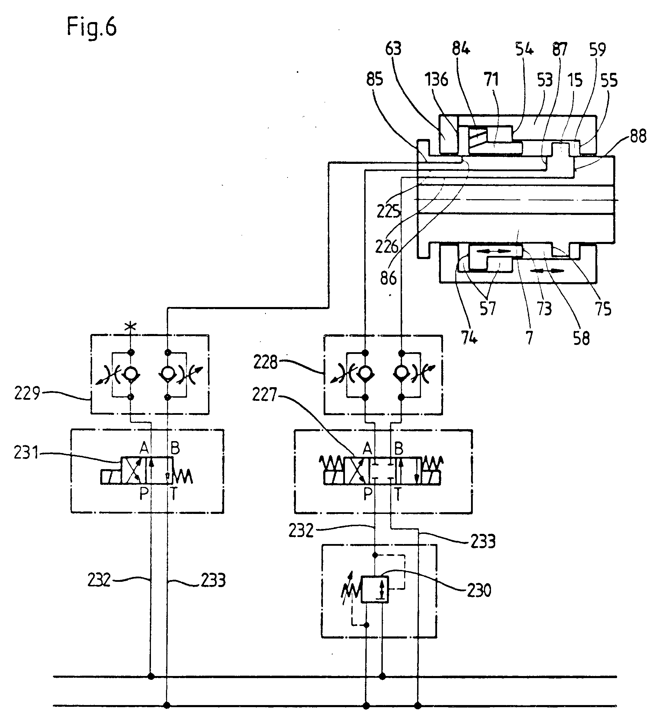

Ein Abdeckblech 215 übergreift die Befestigungsschrauben 213 des Schlittens 211. Desweiteren ist ein ringförmiges Schutzblech 216 auf der Vorderseite der Planscheibe 82 angeordnet und mittels Befestigungsschrauben 217 befestigt. Dieses Schutzblech deckt den inenren Bereich der Vorderseite der Planscheibe 82 ab. Ein Radialdichtring 218 gewährleistet die Abdichtung der Planscheibe 82 gegenüber der Spannmutter 18. Jedem Schlitten 211 ist ein Abstreifer 219 zugeordnet, der zwischen einem Späneschutz 220 und einem Dichtblech 222 mittels Befestigungsschrauben 221 gehalten ist. Das Dichtblech 222 ist mittels Befestigungsschrauben 223 an der Planscheibe 82 befestigt. Ein weiteres Schutzblech 224 ist vor der Trommel 185 angeordnet und deckt den Spalt zur Planscheibe 82 hin ab. Aus Figur 6 ergibt sich die Betätigung der Axialverschiebung der Planscheibe 82.

Die Planscheibe 82 ist, wie bereits erwähnt, drehbar, aber axial unverschiebbar auf der Schiebebuchse 53 gelagert. Die Hauptbuchse 7 trägt die Schiebebuchse 53. Der Zylinderraum 57 in der Schiebebuchse 53 wird über eine Radialbohrung 86 und eine Axialbohrung 85 in der Hauptbuchse 7 mit Druck beaufschlagt oder von Druck entlastet. Der Zylinderraum 58 steht über eine Radialbohrung 87 und eine Axialbohrung 225 in Verbindung nach außen, während diese Verbindung zum Zylinderraum 49 über die Radialbohrung 88 und eine Axialbohrung 226 gewährleistet wird. Die Druckbeaufschlagung bzw. Druckentlastung der Axialbohrungen 225, 226 erfolgt über ein Druckminderventil 230, ein 4/3-Wegeventil 227 und ein Zwillingsdrosselrückschlagventil 228, während die Druckbeaufschlagung bzw. Druckentlastung der Axialbohrung 85 über ein 4/2-Wegeventil 231 und ein weiteres Zwillingsdrosselrückschlagventil 229 erfolgt. Zu den Eingängen P des 4/3-Wegeventils 227 und des 4/2-Wegeventils 231 führen Druckleitungen 232, während zu den Ausgängen T die Rückleitungen 233 führen.

Um die Planscheibe 82 in die Grundstellung zurückzufahren, wird das 4/3-Wegeventil 227 so betätigt, daß der Zylinderraum 58 über die Radialbohrung 87, die Axialbohrung 225, den Ausgang A und den Eingang P mit der Druckleitung 232 verbunden ist. Entsprechend ist der Zylinderraum 59 über die Radialbohrung 88 und die Axialbohrung 226, den Ausgang B und den Ausgang T des 4/3-Wegeventils 227 mit der Rückleitung 233 verbunden. Desweiteren befindet sich das 4/2-Wegeventil 231 in der in Figur 6 dargestellten Stellung, so daß der Zylinderraum 57 über die Radialbohrung 86 und die Axialbohrung 85, den Ausgang B und den Ausgang T mit der Rückleitung 233 verbunden ist und dementsprechend der sich im Zylinderraum 58 aufbauende Druck eine Bewegung der Schiebebuchse 53 und damit der Planscheibe 82 bis zum Anschlag des Absatzes 55 an der Vorderseite des Ringkolbens 15 bewirkt. Soll die Planscheibe 82 in die äußerste entgegengesetzte Stellung verschoben werden, wird das 4/3-Wegeventil 227 so betätigt, daß der Eingang P mit dem Ausgang B und der Ausgang T mit dem Ausgang A in Verbindung stehen. Das 4/2-Wegeventil 231 bleibt in der dargestellten Stellung. Nunmehr wird der Zylinderraum 59 mit Druck beaufschlagt, während Hydraulikflüssigkeit aus dem Zylinderraum 58 über die Radialbohrung 87, die Axialbohrung 225, den Ausgang A, den Ausgang T und die Rückleitung 233 entweichen kann. Entsprechend kann Hydraulikflüssigkeit aus dem Zylinderraum 57 über die Radialbohrung 86, die Axialbohrung 85, den Ausgang B und den Ausgang T des 4/2-Wegeventils 231 in die Rückleitung 233 entweichen.

Soll die Planscheibe 82 mit der Schiebebuchse 53 in eine Mittelstellung zurückgefahren werden, verbleibt das 4/3-Wegeventil 227 in der vorher beschriebenen Stellung, bei der der Eingang P mit dem Ausgang B und der Ausgang A mit dem Ausgang T in Verbindung stehen. Das 4/2-Wegeventil 231 wird so betätigt, daß die Druckleitung 232 über den Eingang P mit dem Ausgang B und damit über die Axialbohrung 85 und die Radialbohrung 86 mit dem Zylinderraum 57 in Verbindung gebracht wird. Hierdurch wandert der Ringkolben 71 zum Anschlag am Absatz 54 der Schiebebuchse 53 bis in die Mittelstellung zurück. Da jede der drei Stellungen durch Anschläge am gehäusefesten Ringkolben 15, der Schiebebuchse 53 und dem Ringkolben 71 begrenzt ist, die keinem Verschleiß unterliegen, ist ein genaues axiales Positionieren der Planscheibe 82 über einen langen Zeitraum gewährleistet.

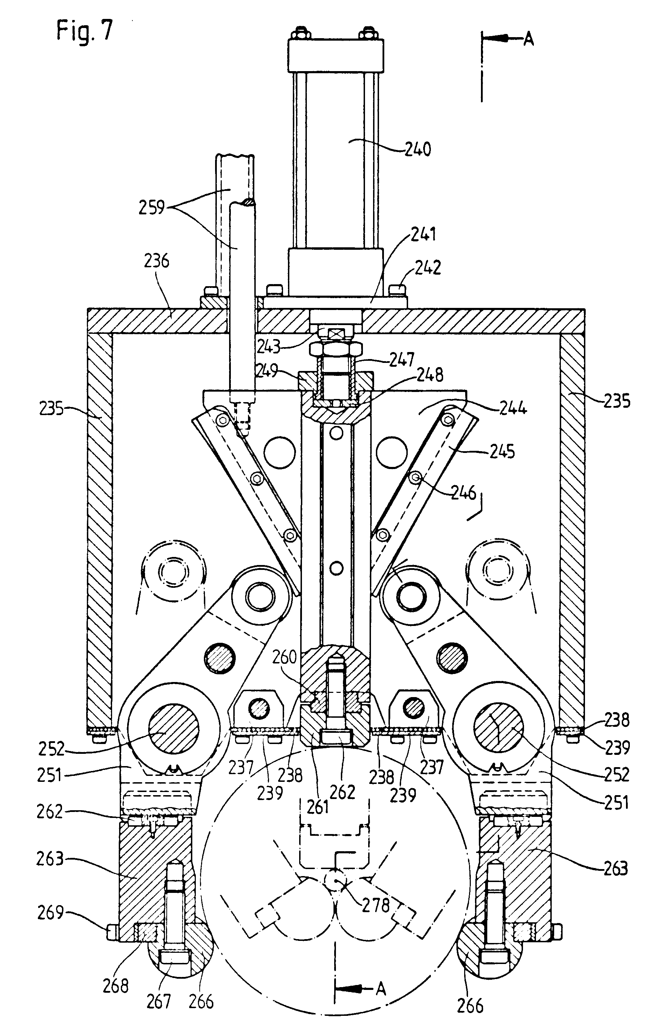

Der in Figuren 7 bis 9 dargestellte Abgreifer weist ein Gehäuse aus zwei parallelen Frontplatten 234, zwei damit verschraubten parallelen Seitenplatten 235 und einer ebenfalls damit verschraubten Kopfplatte 236 auf. Am unteren Ende der Frontplatten 234 und Seitenplatten 235 sind in einem mittleren Bereich Zwischenstücke 237 angeordnet, die als Abstandshalter dienen, und mit denen eine mit Ausnehmungen versehene Dichtungsplatte 238 und eine Verschlußplatte 239 verschraubt sind.

Eine Hydraulik-Kolben-Zylinder-Einheit 240 ist mittels eines Flansches 241 und Befestigungsschrauben 241 mit der Kopfplatte 236 verschraubt, die eine Öffnung für eine Kolbenstange 243 aufweist. Zwischen den Frontplatten 234 ist ein Spannkeil 244 geführt, der über eine Kupplungsbuchse 247, eine Druckscheibe 248 und eine Halteplatte 249 mittels Befestigungsschrauben 250 mit der Kolbenstange 243 verbunden ist.

Mit dem Spannkeil 244 sind Spannkurven 245 mittels Befestigungsschrauben 246 verschraubt. Diese Spannkurven 245 wirken mit doppelarmigen Spannhebeln 251 zusammen, die mittels die Frontplatten 234 durchdringenden Gelenkbolzen 252 im Gehäuse gelagert sind. Die Gelenkbolzen 252 sind mittels doppelter Nutmuttern 253 verspannt und mit Flanschbuchsen 254 versehen, die als Lagerschalen für die Spannhebel 251 dienen.

An dem dem Spannkeil 244 zugewandten Ende des doppelarmigen Spannhebels 251 ist eine Druckrolle 255 mittels eines Radialnadellagers 256 drehbar gelagert und wird von einem Rollenbolzen 257 getragen. Der Rollenbolzen 257 ist gegen axiales Herauswandern durch sich zwischen den Frontplatten 234 abstützende Bundscheibe 258 gesichert.

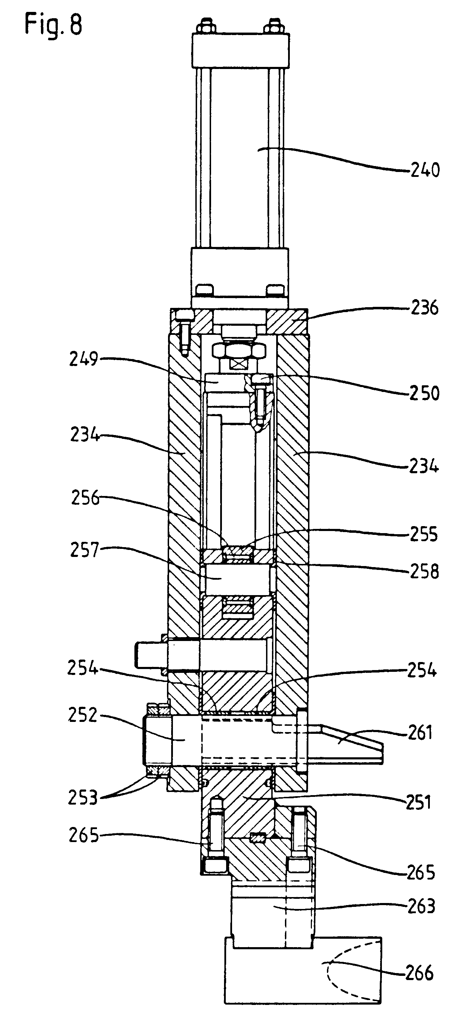

Mit dem Spannkeil 244 und damit mit der Kolbenstange 243 ist ein Wegaufnehmer 259 verbunden, der mit einer nicht dargestellten Steuerung für die Hydraulik-Kolben-Zylinder-Einheit 240 zusammenwirkt. Eine obere Spannbacke 261 ist mit dem Spannkeil 244 über eine Zwischenplatte 260 mittels Befestigungsschrauben 262 verschraubt. Mit dem freien Ende eines jeden Spannhebels 251 ist ein Backenhalter 263 mittels Befestigungsschrauben 265 verschraubt. Der Backenhalter 263 ist mittels eines Keils 262 in axialer Richtung positioniert. Zylindrische untere Spannbacken 266 sind mittels Befestigungsschrauben 267 am Backenhalter 263 verschraubt. Ein ebenfalls mit dem Backenhalter 263 mittels Befestigungsschrauben 269 verschraubtes Druckstück 268 dient dazu, die Spannkräfte von den unteren Spannbacken 266 auf den Backenhalter 263 zu übertragen und von der Befestigungsschraube 267 Querkräfte fernzuhalten. Bei den in Figuren 7 und 8 dargestellten Spannbacken 261, 266 wird eine Linienberührung mit dem einzuspannenden Rohr erreicht, wobei die Berührungslinie stets so gerichtet ist, daß der Spannmittelpunkt des Abgreifers stets die gleiche Lage einnimmt, unabhängig davon, wie groß der Rohrdurchmesser ist. Dies ist in Figur 7 strichpunktiert bezüglich eines Rohres mit sehr kleinem Durchmesser und eines Rohres mit dem größten spannbaren Durchmesser dargestellt.

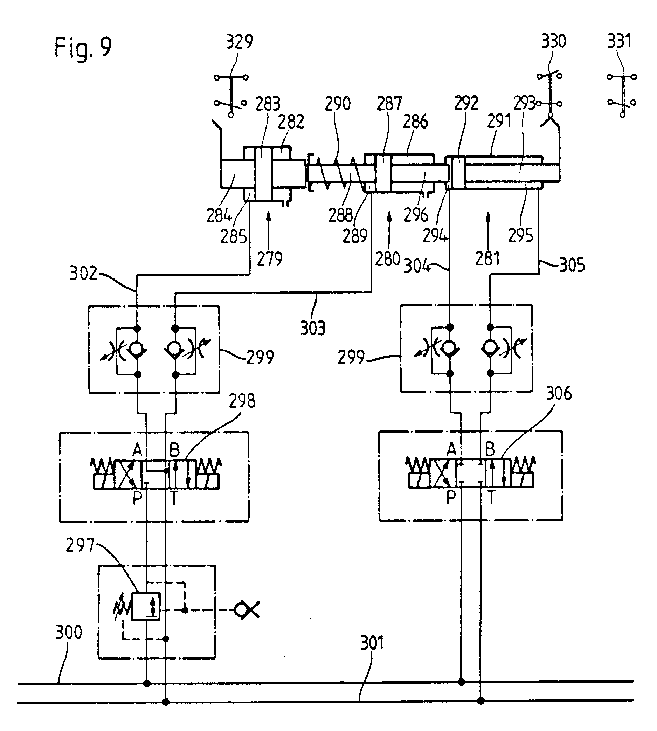

Eine Anordnung von drei sich aneinander abstützenden Hydraulik-Kolben-Zylinder-Einheiten 279, 280, 281 ist in Figur 9 dargestellt. Die Kolben-Zylinder-Einheit 279 ist einfach wirkend und besteht aus einem Zylinder 282 und einem darin leicht verschiebbar angeordneten Kolben 283 mit nach beiden Seiten aus dem Zylinder 282 herausragenden Kolbenstangen 284. Die Kolbenstange 284 stützt sich auf einer Kolbenstange 288 der Kolben-Zylinder-Einheit 280 mit einem Zylinder 286 und einem Kolben 287 ab. Auf der Kolbenstange 288 ist eine Rückholfeder 290 angeordnet. Eine zu der Kolbenstange 288 entgegengesetzt gerichtete Kolbenstange 296 am Kolben 287 wirkt mit der Kolben-Zylinder-Einheit 281 zusammen, indem sie abgedichtet in einen Zylinderraum 294 eines Zylinders 291 geführt ist und sich auf einem Kolben 292 abstützt. Eine Kolbenstange 293 ist aus dem Zylinder 291 der Kolben-Zylinder-Einheit 281 herausgeführt. Die Kolben-Zylinder-Einheit 281 ist doppeltwirkend mit einem Zylinderraum 294 und einem Zylinderraum 295.

Die Druckbeaufschlagung der Kolben-Zylinder-Einheiten 279, 280, 281 erfolgt von einer Druckleitung 300 aus. Diese Druckleitung ist einerseits über ein Druckminderventil 297 mit einem Eingang P eines 4/3-Wegeventils 298 verbunden.

Das 4/3-Wegeventil 298 weist einen mit seiner Rückleitung 301 verbundenen Ausgang T und desweiteren Steuerausgänge A, B auf, von denen der erste über eine Leitung 302 mit dem Zylinderraum 285 der Kolben-Zylinder-Einheit 279 und der Ausgang B über eine Leitung 303 mit dem Zylinderraum 289 der Kolben-Zylinder-Einheit 280 unter Zwischenschaltung eines Zwillings-Drosselrückschlagventils 299 verbunden sind. Ein weiteres 4/3-Wegeventil 306 ist mit seinem Eingang P ebenfalls mit der Druckleitung 300 und mit seinen Ausgang T mit der Rückleitung 301 verbunden. Sein Steuerausgang A ist über eine Leitung 304 mit dem Zylinderraum 294 und der Steuerausgang B über eine Leitung 305 mit dem Zylinderraum 295 der Kolben-Zylinder-Einheit 281 unter Zwischenschaltung eines weiteren Zwillings-Drosselrückschlagventils 299 verbunden.

Mit dieser Anordnung lassen sich über schematisch dargestellte Endschalter 329, 330, 331 drei Axialstellungen des Abgreifers mit Bezug auf den Abstechkopf der Maschine zum Abstechen von Rohren ansteuern.

In der dargestellten Stellung der 4/3-Wegeventile 298, 303 sind die Zylinderräume 285, 289 der Kolben-Zylinder-Einheiten 279, 280 mit der Rückleitung 301 verbunden, so daß die Rückholfeder 290 mit den Kolben 283 mit Kolbenstange 284 und den Kolben 287 mit den Kolbenstangen 288, 296 nach links in die dargestellte Stellung verschiebt. Da bei der gezeichneten Stellung des 4/3-Wegeventils 306 die Ein- und Ausgänge A, B, P, T blockiert sind, ist auch der Kolben 292 mit seiner Kolbenstange 293 blockiert.

In die dargestellte Stellung läßt sich der Kolben 292 der Kolben-Zylinder-Einheit 281 bewegen, indem das 4/3-Wegeventil 306 so betätigt wird, daß eine Druckverbindung zwischen dem Eingang P und dem Steuerausgang B hergestellt wird. Gleichzeitig wird eine Entlastungsverbindung zwischen dem Steuerausgang A und dem Ausgang T hergestellt, so daß der Zylinderraum 295 druckbeaufschlagt und der Zylinderraum 294 druckentlastet werden.

Um den Kolben 292 der Kolben-Zylinder-Einheit 281 nach rechts zu bewegen, wird das 4/3-Wegeventil 298 so betätigt, daß sich eine Druckverbindung zwischen dem Eingang P und dem Steuerausgang B ergibt. Dadurch wird der Zylinderraum 289 der Kolben-Zylinder-Einheit 280 druckbeaufschlagt und verschiebt den Kolben 292 der Kolben-Zylinder-Einheit 281 gegen den Druck im Zylinderraum 295, da die wirksame Kolbenfläche des Kolbens 287 größer als die wirksame Kolbenfläche des Kolbens 292 auf der Seite des Zylinderraums 295 ist.

Soll der Abgreifer in eine Mittelstellung zurückgefahren werden, wird das 4/3-Wegeventil 298 so betätigt, daß sich eine Druckverbindung zwischen dem Eingang P und dem Steuerausgang A einstellt. Der Steuerausgang B ist dann mit dem Ausgang T und damit mit der Rückleitung 301 verbunden. Der Zylinderraum 285 der Kolben-Zylinder-Einheit 279 wird dadurch druckbeaufschlagt, während der Zylinderraum 289 der Kolben-Zylinder-Einheit 280 druckentlastet ist. Der Kolben 283 mit der Kolbenstange 284 rückt somit nach rechts, während der Kolben 292 unter der Wirkung der Druckbeaufschlagung im Zylinderraum 295 nach links wandert und dabei die Kolbenstange 296, den Kolben 287 und die Kolbenstange 288 mit Unterstützung durch die Rückholfeder 290 nach links bis zum Anschlag an die Kolbenstange 284 der Kolben-Zylinder-Einheit 279 drückt.

Sollen der Kolben 292 mit der Kolbenstange 293 in die dargestellte Grundstellung zurückgefahren werden, genügt es, das 4/3-Wegeventil 298 in die dargestellte Stellung zu bringen. Die Zylinderräume 285 und 289 werden druckentlastet und der Kolben 292 mit der Kolbenstange 293 wandert unter der Wirkung der Druckbelastung des Zylinderraums 295 in die dargestellte Stellung.

Auf diese Weise lassen sich die drei Stellungen des Abgreifers in definierter Weise durch nur zwei Steuerventile 298, 306 ansteuern, wobei gewährleistet ist, daß jede der drei Stellungen durch einen Anschlag definiert und somit reproduzierbar bei jedem Bearbeitungsvorgang ansteuerbar ist.

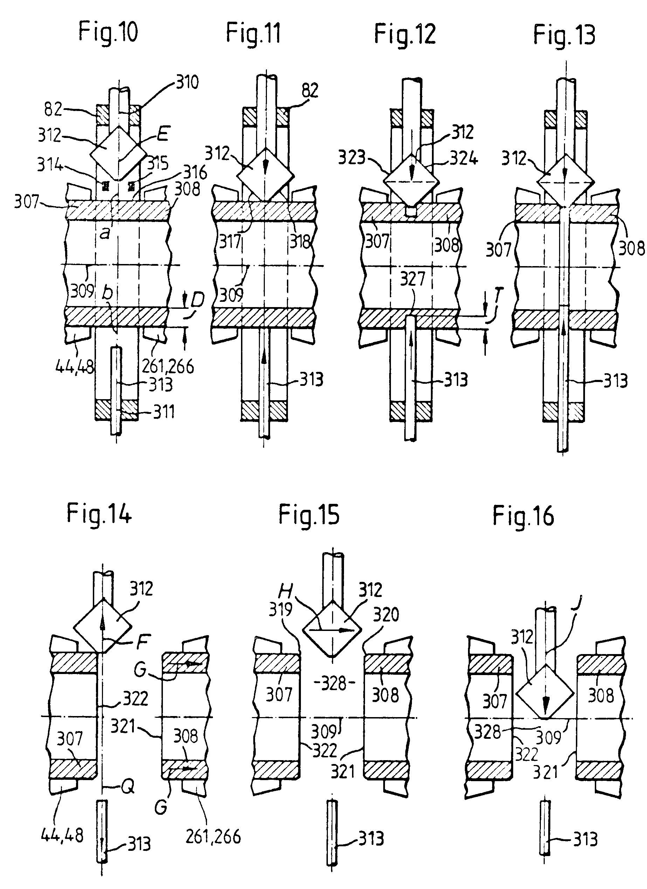

In den Figuren 10 bis 21 sind die einzelnen Verfahrensschritte bei Benutzung der Maschine unter Anwendung eines Innen- und Außenfaswerkzeuges dargestellt und zwar das gleichzeitige Trennen der Rohrabschnitte und Erstellen der Außenfasen an den benachbarten Stirnkanten der Rchrabschnitte, das axiale Bewegen des abgetrennten Rohrabschnitts und des Innen- und Außenfaswerkzeugs, das radiale Einwärtsfahren dieses Werkzeugs und anschließende Bewegen des getrennten Rohrabschnitts gegen den feststehenden Rohrabschnitt und das Erstellen der Innenfasen durch radiales Auswärtsfahren des Faswerkzeuges sowie das Herausfahren des Innen- und Außenfaswerkezugs in die Ausgangsposition, nachdem die Rohrabschnitte wieder voneinander fortbewegt wurden.

Die beiden benachbarten Enden der beiden Rohrabschnitte 307, 308 sind in bekannter Weise in der Maschine durch Spannbacken 44, 48 bzw. 261, 266 gehalten, wobei der Abschnitt 307 in vorliegendem Beispiel festgelegt ist und der Abschnitt 308, wie unten noch erläutert wird, axial bewegbar ist.

Um die gemeinsame Rohrlängsachse 309 ist in der Maschine die Planscheibe 82 angeordnet, die um die genannte Längsmittelachse 309 kreist. An ihm sind mittels je eines Schaftes 310, 311 od. dgl. ein Faswerkzeug 312 und ein Abstech- oder Trennwerkzeug 313 in der Ebene E radial einwärts gegen die Längsmittelachse 309 und von dieser auswärts bewegbar. - Wie aus Figuren 10 bis 12 erkennbar ist, sind die beiden Werkzeuge 312, 313 unabhängig voneinander und im Abstand (hier im winkelmäßigen Abstand von 180°) an der Planscheibe 82 angeordnet. Außer der hier dargestellten diametral gegenüberliegenden Anordnung der beiden Werkzeuge 312, 313 können auch mehrere Werkzeuge in anderer Anordnung an der Planscheibe 82 vorgesehen werden.

Die beiden Werkzeuge 312, 313, die planetenartig um das Rohr 307, 308 und die Längsmittelachse 309 kreisen, können unabhängig voneinander, wie bereits mit Bezug auf Figuren 2 und 3 beschrieben, radial einwärts und radial auswärts verstellt werden und dies gleichzeitig mit unterschiedlicher Geschwindigkeit. - In den Bereichen zwischen den Werkzeugen 312, 313 und ihren Schäften 310, 311 kann die Planscheibe 82 Meßeinrichtungen 314, 315 aufweisen, mit deren Hilfe nicht nur die Oberfläche 316 des Rohres 307, 308 datenmäßig erfaßt wird, vielmehr auch die Dicke D des Rohres 307, 308 in gleicher Weise ermittelt wird.

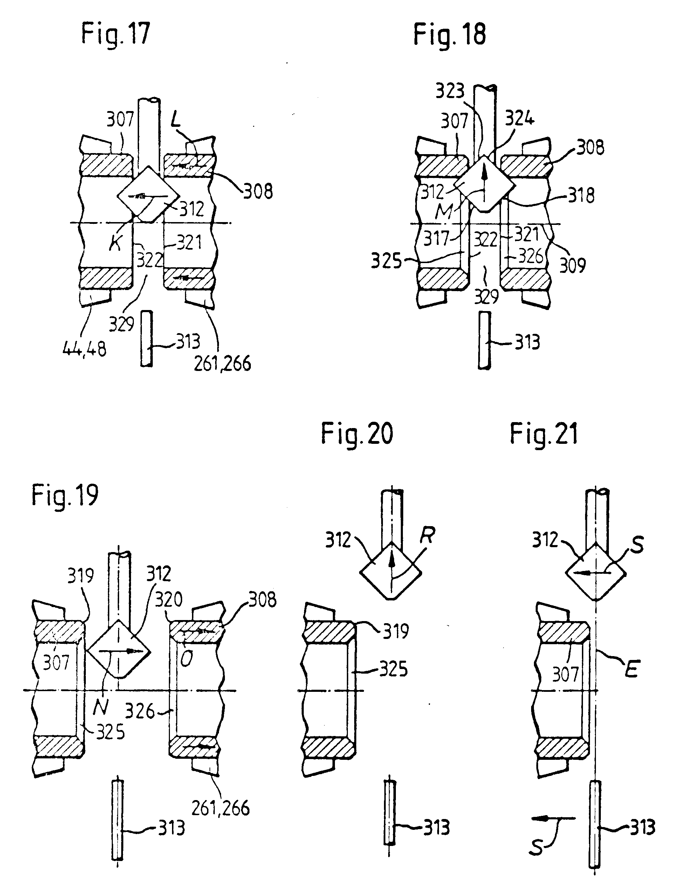

Wie die Figuren 10 bis 12 erkennen lassen, weist das Faswerkzeug 312 quadratische oder rechteckige Form auf und besitzt die beiden Faskanten 317, 318, die dem Erstellen der Außenfasen 319, 320 (Figuren 15 und 19) an den beiden Stirnkanten 321, 322 (Figuren 14 bis 18) dienen, und die Faskanten 323, 324, die für das Erstellen der Innenfasen 325, 326 an den genannten Stirnkanten 321, 322 (Figuren 18 und 19) vorgesehen sind.

Nachstehend wird das erfindungsgemäße Verfahren, das mit der vorstehend beschriebenen Maschine durchgeführt wird, erläutert. Im Ausgangszustand der beiden Werkzeuge 312, 313 nehmen diese die in Figur 10 dargestellte Lage ein, wobei der Abstand der Werkzeuge 312, 313 von der Rohraußenseite geringer als der in Figur 10 dargestellte Abstand a und b sein kann.

Die beiden Werkzeuge 312, 313 werden gemäß Figur 11 gleichzeitig radial gegen die Längsmittelachse 309 des Rohres 307, 308 derart verstellt, daß das Abstech- oder Trennwerkzeug 313 über eine Tiefe T in die Rohrwandung des feststehenden Rohres 307, 308 eindringt und hierbei gleichzeitig die beiden Faskanten 317, 318 des Faswerkzeuges 312 die giebelförmigen Außenfasen 319, 320 erstellt. Erst wenn die Außenfasen 319, 320 an den Rohrabschnitten 307, 308 gebildet sind, durchtrennt das Werkzeug 313 den stegartigen Restabschnitt 327 (Figur 12), so wie dies in Figur 13 dargestellt ist. Dies hat den Vorteil, daß die beiden Rohrabschnitte 307, 308 während des Außenfasvorgangs miteinander verbunden bleiben, und hierdurch genau positionierte Außenfasen 319, 320 mit genau gleicher Ausbildung erstellt werden können.

Daraufhin wird gemäß Figur 14 das Abstech- oder Trennwerkzeug 313 in seine Ausgangsposition radial auswärts gebracht (Pfeil P), während das Faswerkzeug 312 gleichfalls radial auswärts bewegt wird (Pfeil F). Im Anschluß hieran werden gemäß Figuren 14 und 15 der Rohrabschnitt 307 und die Planscheibe 82 mit den Werkzeugen 312, 313 nach rechts verschoben (Pfeile G und H), so daß die Durchtrittsöffnung 328 zwischen den beiden Stirnkanten 321, 322 der beiden Rohrabschnitte 307, 308 gebildet wird, in den nunmehr bei stillstehendem Abstech- und Trennwerkzeug 313 in dessen Ausgangsstellung das Faswerkzeug 312 in den Bereich des Innenquerschnitts der Rohrabschnitte 307, 308 an der Planscheibe 82 radial verschoben werden kann (Pfeil J in Figur 16). Hieraufhin wird, wie Figur 17 verdeutlicht, das Werkzeug 312 an der Planscheibe 82 mit dem Werkzeug 313 nach links verschoben (Pfeil K). Ein gleiches Verschieben erfährt der Rohrabschnitt 308 (Pfeil L) derart, daß nunmehr zwischen den beiden Stirnkanten 321, 322 ein Zwischenraum 329 entsteht. Das Faswerkezug 312 mit seinen Außenkanten 317, 318 wird nunmehr wiederum bei stillstehendem Trennwerkzeug 313 radial auswärts bewegt (Figur 18 - Pfeil M), wodurch die Innenfasen 325, 326 an den beiden Stirnkanten 321, 322 erstellt werden. Im Anschluß hieran können die Werkzeuge 312, 313 nach außen in ihre Ausgangsstellung bewegt werden bzw. der abgetrennte Rohrabschnitt 307 entfernt werden (Pfeile N, O, R, S in Figuren 19, 20 und 21).

## Patentansprüche

1. Maschine zum Abstechen von Rohren und Anfasen der hierbei gebildeten Rohrstirnkanten mit einem Abstechkopf (36, 44, 48) zum Einspannen eines Rohrendes aus einer mittels einer ringförmigen Hydraulik-Kolben-Zylinder-Einheit (7, 25, 135) axial verschiebbaren Druckhülse (36) mit radialen Keilflächen (37, 38) und darin konzentrisch angeordneten, axial unverschiebbaren, mittels komplementärer Keilflächen (45, 46) radial zustellbaren Spannbacken (44), mit einer drehbaren, mit einem Drehantrieb (78, 79) gekuppelten Planscheibe (82) zur Aufnahme von wenigstens zwei radial gegenüberliegenden und radial zustellbaren Abstechwerkzeugen (313) und Faswerkzeugen (312) und mit einem Abgreifer zum Halten des abzustechenden Rohrteils aus mittels einer Hydraulik-Kolben-Zylinder-Einheit (240) betätigbaren Spannbacken (261, 266), **dadurch gekennzeichnet,** daß die Planscheibe (82) mittels einer ringförmigen Hydraulik-Kolben-Zylinder-Einheit (15, 53 71) aus einem gehäusefesten Ringkolben (15), einer die Planscheibe (82) drehbar tragenden Schiebebuchse (53) und einem axial beweglichen Anschlag (71) konzentrisch und axial verschiebbar auf einer gehäusefesten Buchse (7) der Hydraulik-Kolben-Zylinder-Einheit (7, 25, 135) für den Abstechkopf (36, 44, 48) angeordnet ist und der Drehantrieb (78, 79) der Planscheibe (82) konzentrisch zueinander angeordnete, unabhängige Drehantriebe (89, 90, 101, 102) für die radiale Zustellung der Abstechwerkzeuge (313) und Faswerkzeuge (312) trägt.

2. Maschine nach Anspruch 1, dadurch gekennzeichnet, daß die Halter für die Abstechwerkzeuge und gegebenenfalls Faswerkzeuge in radialen Führungen (214) auf der Planscheibe (82) angeordnet sind und Gewindespindelantriebe (110, 208, 209) aufweisen, die über Kegelritzel (108, 109) mit Kronenrädern (98, 103) in Eingriff stehen, wobei die Kronenräder (98, 103) mit dem Drehantrieb (89, 90) für die radiale Zustellung gekuppelt sind.

3. Maschine nach Anspruch 2, dadurch gekennzeichnet, daß die radialen Führungen aus nadelgelagerten Prismenführungsleisten (188) bestehen, die in radialen Ausnehmungen (187) der Planscheibe (82) angeordnet sind und das Spiel in den Führungen (188) mittels die Ausnehmungen überspannender Zuglaschen (192) einstellbar ist.

4. Maschine nach Anspruch 3, dadurch gekennzeichnet, daß in Bohrungen an den Enden der Zuglaschen (192) Köpfe (197) von achsparallel zur Drehachse der Planscheibe (82) angeordneten Spannschrauben (195) eingreifen.

5. Maschine nach einem oder mehreren der Ansprüche 1 bis 4, dadurch gekennzeichnet, daß der Drehantrieb für die Planscheibe ein im Gehäuse (1) gelagertes, mit einem Zahnrad (79) an der Planscheibe (82) in Eingriff stehendes Ritzel (156) mit einer Innenverzahnung (158), die über in einem drehbaren Käfig (180, 181) gelagerte Planetenräder (167) mit einem gehäusefesten Sonnenrad (124) in Eingriff steht, aufweist und daß der Drehantrieb für die radiale Zustellung der Abstechwerkzeuge und gegebenenfalls Faswerkzeuge ein im Gehäuse (1) gelagertes, mit einem an der Planscheibe (82) drehbar gelagertem Zahnrad (90) in Eingriff stehendes Ritzel (162, 162a) mit Innenverzahnung (163), daß über im selben Käfig (180, 181) gelagerte Planetenräder (168) mit einem drehbaren Sonnenrad (130) in Eingriff steht, aufweist, wobei das drehbare Sonnenrad (130) von einem Servomotor (175) in beiden Richtungen antreibbar ist und im Stillstand gebremst gehalten ist.

6. Maschine nach Anspruch 5, dadurch gekennzeichnet, daß der Servomotor (175) aus einem Drehstrommotor mit daran angeordnetem Inkrementalgeber besteht.

7. Maschine nach Anspruch 6, gekennzeichnet durch einen Zahnriemenantrieb (131, 176, 177) zwischen dem Servomotor (175) und dem drehbaren Sonnenrad (130).

8. Maschine nach einem oder mehreren der Ansprüche 1 bis 7, dadurch gekennzeichnet, daß das an der Planscheibe (82) drehbar gelagerte Zahnrad (90, 102) drehfest mit dem Kronenrad (98, 103) verbunden ist.

9. Maschine nach einem oder mehreren der Ansprüche 1 bis 8, dadurch gekennzeichnet, daß jeweils paarweise radial gegenüberliegende Abstechwerkzeuge und gegebenenfalls um 90° versetzt angeordnete, paarweise gegenüberliegende Faswerkzeuge über konzentrische Kronenräder (98, 103) und radial entsprechend versetzte Kegelritzel (108, 109) durch je einen unabhängigen Drehantrieb über je ein Ritzel (161, 162, 162a) mit Innenverzahnung (163), Planetenräder (168) und ein Sonnenrad (130) radial zustellbar sind.

10. Maschine nach einem oder mehreren der Ansprüche 1 bis 9, **dadurch gekennzeichnet,** daß zwischen dem gehäusefesten Ringkolben (15) und der Schiebebuchse (53) ein beweglicher, hydraulisch gesteuerter Ringkolben (71) als verstellbarer Anschlag für die Schiebebuchse (53) angeordnet ist.

11. Maschine nach Anspruch 10, **dadurch gekennzeichnet,** daß die Vorder- und Rückseite des gehäusefesten Ringkolbens (15) über Ausgänge (A, B) eines 4/3 Wegeventils (227) gesteuert wird, daß die Vorderseite (73) des beweglichen Ringkolbens (71) mit dem Zylinderraum (58) der Rückseite des gehäusefesten Ringkolbens (15) in Verbindung steht und daß die Rückseite des gehäusefesten Ringkolbens (74) des beweglichen Ringkolbens (71) über den Ausgang (B) eines 4/2-Wegeventils (231) angesteuert wird, während der Ausgang (A) gesperrt ist.

12. Maschine nach Anspruch 10 oder 11, **dadurch gekennzeichnet,** daß der Weg des beweglichen Ringkolbens (71) nach vorwärts durch einen Anschlag (75) am gehäusefesten Ringkolben (15) und durch einen Anschlag (54) an der Schiebebuchse (53) und der Weg nach rückwärts durch einen Anschlag (136) an der Schiebebuchse (53) begrenzt ist und daß der Weg der Schiebebuchse (53) bei Anliegen des beweglichen Ringkolbens (71) an der Schiebebuchse (53) durch Beaufschlagung der Rückseite (74) des beweglichen Ringkolbens (71) auf eine Mittelstellung begrenzt ist.

13. Maschine nach einem oder mehreren der Ansprüche 1 bis 12, **gekennzeichnet durch** eine die Bewegung des Abgreifers in Richtung der Rohrachse steuernde Anordnung von drei sich mit ihren Kolbenstangen (284, 288, 296) aneinander abstützenden Hydraulik-Kolben-Zylinder-Einheiten (279, 280, 281), von denen eine doppeltwirkend und mit dem Ausgang (A, B) eines 4/3-Wegeventils (306) verbunden ist, während die beiden anderen einfachwirkend sind und jeweils mit dem Ausgang (A) bzw. Ausgang (B) eines weiteren 4/3-Wegeventils (298) verbunden sind, das in seiner Mittelstellung die Ausgänge (A) und (B) mit der Rückleitung (301) verbindet.

14. Maschine nach Anspruch 13, **dadurch gekennzeichnet,** daß die doppeltwirkende Hydraulik-Kolben-Zylinder-Einheit (281) das Ende der Kette bildet und die mittlere, einfachwirkende Kolben-Zylinder-Einheit (280) eine Rückholfeder (290) und eine in den Zylinder (291) der doppeltwirkenden Hydraulik-Kolben-Zylinder-Einheit (281) eintauchende Kolbenstange (296) aufweist.

15. Verfahren zum Abstechen und Anfasen von Rohren mittels mindestens eines Faswerkzeugs (312) und mindestens eines Abstechwerkzeugs (313), die gemeinsam planetenartig um die Rohrlängsmittelachse (309) kreisend angeordnet und gegenüber dieser radial verstellbar sind, wobei das Faswerkzeug (312) paarweise angeordnete Faskanten (317, 318, 323, 324) zum gleichzeitigen Erstellen der Außenfasen (319, 320) und zum Erstellen der Innenfasen an axial gegenüberliegenden Rohrstirnkanten aufweist, wobei nach dem Abstechen und Fertigstellen der Außenfasen (319, 320) die abgetrennten Rohrenden (307, 308) relativ zueinander axial auseinander gefahren werden, zum Einführen des Faswerkzeugs (312), zwecks Herstellung der Innenfasen, **dadurch gekennzeichnet,** daß ein vom Faswerkzeug (312) getrenntes Abstechwerkzeug (313) verwendet wird, die beide gleichzeitig oder im wesentlichen gleichzeitig mit unterschiedlichen Geschwindigkeiten radial einwärts bewegt werden, wobei der Abstechvorgang erst nach Fertigstellung der Außenfasen beendet wird, und daß zur Herstellung der Innenfasen lediglich eines der beiden Rohrenden (307, 308) axial bewegt wird, wonach das Faswerkzeug (312) in den Spalt eingefuhrt und zunächst ohne Schneidvorhub axial in Richtung des nicht axial bewegten Rohrendes in Schneidposition gebracht wird und daß anschließend das axial bewegte Rohrende wieder bis in Schneidposition auf das Faswerkzeug (312) zur Herstellung der Innenfasen radial nach auswärts bewegt wird, worauf schließlich das eine Rohrende wieder axial vom anderen wegbewegt wird, zum Herausführen des Faswerkzeugs (312).

16. Verfahren nach Anspruch 15, **dadurch gekennzeichnet,** daß das Abstechwerkzeug während des Bewegungsablaufs zur Herstellung der Innenfasen in seiner Ausgangslage gehalten wird.

17. Maschine nach einem oder mehreren der Ansprüche 1 bis 14 zur Durchführung des Verfahrens gemäß Anspruch 15 und 16 mittels mindestens eines Faswerkzeugs (312) und mindestens eines Abstechwerkzeugs (313), die gemeinsam planetenartig um die Rohrlängsmittelachse kreisend angeordnet und dieser gegenüber radial verstellbar sind, wobei das Faswerkzeug (312) paarweise angeordnete Faskanten (317, 318, 323, 324) zum gleichzeitigen Erstellen der Außenfasen und zum Erstellen der Innenfasen an axial gegenüberliegenden Rohrstirnkanten aufweist, **dadurch gekennzeichnet,** daß die Rohrenden undrehbar mittels des Abstechkopfs (36, 44, 48) und Haltemitteln (261, 266) festspannbar und mittels der steuerbaren Hydraulik-Kolben-Zylinder-Einheit (15, 53 71) relativ zueinander axial bewegbar sind zum Durchtritt des Faswerkzeugs (312), welches auch axial bezüglich der Rohrlängsmittelachse beweglich ist, wobei das Faswerkzeug (312) vom Abstechwerkzeug (313) getrennt angeordnet ist, beide unabhängig voneinander mit unterschiedlichen Geschwindigkeiten gleichzeitig oder im wesentlichen gleichzeitig radial einwärts vorschubbeweglich sind, die steuerbare Hydraulik-Kolben-Zylinder-Einheit (15, 53, 71) nur dem einen Rohrende (307) zugeordnet ist und das Faswerkzeug (312) zur Herstellung der Innenfasen (325, 326) auch radial auswärts vorschubbeweglich ist.

## Claims

1. Machine for cutting of pipes and chamfering pipe front rims formed in this way, with a cutting head (36, 99, 44) for holding a pipe end out of a pressure sleeve (36) which can move axially, by means of a circular hydraulic piston-cylinder unit (7, 25, 135), with radial cutter surfaces (37, 38) and axially stationary clamping jaws (44), which can be closed radially by means of complementary cutter surfaces (45, 46), disposed concentrically in a said pressure sleeve (36), and with a rotating faceplate (82), coupled with a turning propulsion means (78, 79), for uptake of at least two radially opposite and radially closable parting tools (313) and chamfering tools (312), and with an adjuster for holding a pipe section to be cut off, comprising clamping jaws (261, 266) which can be operated by means of a hydraulic piston-cylinder unit (240), **wherein** a faceplate (82), is concentrically disposed such that it can move axially on a bushing (7), which is flush with its housing, of an hydraulic piston-cylinder unit (7, 25, 135) for a cutting head (36, 44, 48), by means of an annular hydraulic piston-cylinder unit (15, 53, 71), comprising an annular piston (15) which is flush against its housing, a sliding bush (53) which carries a said faceplate (82) such that it can rotate, and an axially movable stop (72), and a turning drive (78, 79) of a said faceplate carries independent, turning drives (89, 90, 101, 102), which are disposed concentrically in relation to each other, for radial closing of parting tools (313) and chamfering tools (312).

2. Machine in accordance with claim 1, **wherein** a holder for parting tools and, where applicable, for chamfering tools, are disposed in radial guideways (214) on a faceplate (82) and have threaded spindle drives (110, 208, 209) which are engaged in cogwheels (98, 103) by means of bevel pinions (108, 109), whereby said cogwheels (98, 103) are coupled with a turning drive (89, 90) for radial closure.

3. Machine in accordance with claim 2, **wherein** radial guideways consist of prismatic guide strips (188) supported by needle bearings which are disposed in radial recesses (287) of a faceplate (82) and play in said guideways (188) can be set by means of pull side-bars (192) which place said recesses under tension.

4. Machine in accordance with claim 3, **wherein** heads (197), of tension bolts (195) disposed such that axes of these latter are parallel to an axis of rotation of a faceplate (82), engage in borings on the end of pull side-bars (192).

5. Machine in accordance with one or several of claims 1 to 4, **wherein** a turning drive has a pinion (156) engaged with a cogwheel (79) on a faceplate (82) which is supported in a housing (1) for a faceplate (82), a said pinion (156) having internal toothing (158) which is engaged with a sun wheel (124), which is solid with its housing, by means of planet pinions (187) supported in a rotating lantern wheel, and a said turning drive has a pinion (162, 162a) engaged with a cogwheel (90) supported such that it can rotate on a said faceplate (82) for radial closing of parting tools and, where applicable, chamfering tools, a said pinion (162, 162a) having internal toothing (163) which is engaged in a sun wheel (130), which can revolve, by means of planet pinions supported in a same lantern wheel (180, 181), whereby a said revolving sun wheel (130) can be propelled in both directions by a servomotor (175) and is braked when at a standstill.

6. Machine in accordance with claim 5, **wherein** a servomotor (175) comprises an induction motor with an incrementing means disposed on it.

7. Machine in accordance with claim 6, **wherein** there is a cog belt transmission (131, 176, 177) between a servomotor (175) and a rotating sun wheel (130).

8. Machine in accordance with one or several of claims 1 to 7, **wherein** a cogwheel (99, 102), supported on a face plate (82) such that it can rotate, is connected to a cogwheel (98, 103) with which it rotates.

9. Machine in accordance with one or several of claims 1 to 8, **wherein** pairs of radially opposite parting tools and, where applicable, chamfering tools in opposite pairs disposed separated by an angle of 90°, can, in each case, be closed by means of concentric cogwheels (98, 103) and radially correspondingly displaced bevel pinions (108, 109), by means of a turning drive which is in each case independent, via, in each case, a pinion (161, 162, 162a) with internal toothing (163), planet pinion wheels (168) and a sun wheel (130).

10. Machine in accordance with one or several of claims 1 to 9, **wherein** a movable, hydraulically controlled annular piston (71), as a variable stop for a sliding bushing (53), is disposed between an annular piston (15), which is tight against its housing, and a sliding bushing (53).

11. Machine in accordance with claim 10, **wherein** a front and rear side of an annular piston (15), which is flush with its housing, are controlled by means of outlets (A, B) of a 4/3 route valve (227), a front side (73) of an annular piston (71) is connected to a cylinder space (58) of a rear side of an annular piston (15), which is tight against its housing, and a rear side of an annular piston (74) of a said annular piston is controlled by means of an outlet (B) of a 4/2 route valve (231), while outlet (A) is closed.

12. Machine in accordance with either claim 10 or claim 11, **wherein** a path of a movable annular piston (71) is stopped in a forwards direction by a stop (75) on an annular piston (15) which is flush against its housing and a stop (54) on a sliding bushing (53), and a path concerned in a backwards direction is limited by a stop (136) on a sliding bushing (53) and a path of a sliding bushing (53), when a said movable annular piston (71) is lying against a sliding bushing (53), is limited by abutment of a reverse side (74) of a said movable piston (71) at a central position.

13. Machine in accordance with one or several of claims 1 to 12, **wherein**, for movement of an adjuster, there is an arrangement of three hydraulic piston-cylinder units (279, 280, 281) supporting each other with their piston rods (284, 288, 296) one of said hydraulic piston-cylinder units being doubly active and being connected with the outlet (A, B) of a 4/3 route-valve (306), while both other hydraulic piston-cylinder units act singly and are in each case connected with outlet (A) or outlet (B) of a further 4/3 route valve (298) which, in its central position connects two outlets (A) and (B) with a return circuit.

14. Machine in accordance with claim 13, **wherein** a doubly-acting hydraulic piston-cylinder unit (281) forms an end of a chain and a central, single-acting piston-cylinder unit (280) has a return spring (290) and a piston-rod (296) which dips into a cylinder of a doubly-acting hydraulic piston-cylinder unit (281).

15. Process for cutting and chamfering pipes by means of at least one chamfering tool (312) and at least one parting tool (313) which, together, circulate around a central axis of a pipe and are radially adjustable in relation to this, whereby a pair of chamfering edges (317, 318, 323, 324) are disposed on a said chamfering tool (312) for simultaneous production of external chamfering (319, 320) and production of internal chamfering on axially opposite pipe front rims, whereby, after cutting and finishing of external chamfering (319, 320), separated ends of pipes (307, 308) are moved away from each other in an axial direction, for introduction of a chamfering tool (312) for providing inner chamfering (312)**, wherein** a cutting tool (312) is used which moves both, simultaneously or substantially simultaneously, radially inwards, at different speeds, whereby a parting process concerned is finished after completion of outer chamfering, and, for producing inner chamfering, only one of two pipe ends concerned is moved axially, after which a said chamfering tool (312) is introduced into a gap and, firstly, is brought into a cutting position in a direction of a pipe end concerned which is not moved axially, without cutting-forward-movement, and then an axially moved pipe end concerned is again moved radially outwards into a cutting position on a chamfering tool (312) to produce internal chamfering, whereupon, finally, one of two pipe ends concerned is again moved axially away from the other one, so that a said chamfering tool can be extracted.

16. Process in accordance with claim 15, **wherein** a parting tool is held in its starting position during a movement process for producing inner chamfering.

17. Machine in accordance with one or several of claims 1 to 14 for carrying out a process in accordance with claims 15 and 16 by means of at least one chamfering tool (312) and at least one parting tool (313) which are disposed such that they circle around a central, longitudinal axis of a pipe and such that they can be radially adjusted, whereby chamfering edges (317, 318, 323, 324) are disposed in a pair on a said chamfering tool (312) for simultaneously producing outer and inner chamfering on axially opposite pipe front rims, **wherein** pipe ends can be clamped non-rotationally by means of a parting tool (36, 44, 48) and retaining means (261, 266) can move axially in relation to each other by means of a controllable hydraulic piston-cylinder unit (15, 53 71) allowing passage-through of a said chamfering tool (312) which can also move axially in relation to a longitudinal central axis of a pipe, whereby a said chamfering tool (312) is disposed separate from a said parting tool, both can be pushed forward, inwards, radially, independently of each other, with different speeds, simultaneously or substantially simultaneously, and a controllable hydraulic piston-cylinder unit (15, 53, 71) is only associated with one of two pipe ends (307) concerned and a said chamfering tool (312) for producing inner chamfering (325, 326) can also be pushed radially outwards.

## Revendications

1. Machine pour tronçonner des tubes et chanfreiner les bords de tubes frontaux ainsi formés, comportant une tête à tronçonner (36, 44, 48) destinée à serrer une extrémité du tube, constituée par un manchon de pression (36) pouvant être déplacé radialement au moyen d'une unité annulaire hydraulique à piston et cylindre (7, 25, 135), comportant des surfaces en coin radiales (37, 38) et des mâchoires de serrage (44) placées concentriquement à l'intérieur de celui-ci, non déplaçables axialement, réglables radialement au moyen de surfaces en coin complémentaires (45, 46), comportant un disque plan tournant (82) accouplé à un mécanisme d'entraînement en rotation (78, 79) et destiné à loger au moins deux outils à tronçonner (313) se faisant face radialement et réglables radialement, et des outils à chanfreiner (312), et comprenant un organe de retenue pour maintenir la partie de tube à tronçonner, constitué de mâchoires de serrage (261, 266) pouvant être actionnées par une unité hydraulique à piston et cylindre (240), caractérisée en ce que le disque plan (82) est monté au moyen d'une unité hydraulique à piston et cylindre de forme annulaire (15, 53, 71) formée par un piston annulaire (15) fixé au boîtier, une douille coulissante (53) supportant de façon rotative le disque plan (82) et une butée (71) mobile en direction axiale et déplaçable concentriquement et axialement sur une douille (7) fixée au boîtier de l'unité hydraulique à piston et cylindre (7, 25, 135) destinée à la tête à tronçonner (36, 44, 48), et le mécanisme d'entraînement en rotation (78, 79) du disque plan (82) supporte des mécanismes d'entraînement (89, 90, 101, 102) indépendants et disposés concentriquement les uns par rapport aux autres pour le réglage en direction radiale des outils à tronçonner (313) et des outils à chanfreiner (312).

2. Machine selon la revendication 1, caractérisée en ce que les supports des outils à tronçonner et éventuellement des outils à chanfreiner sont disposés dans des dispositifs de guidage radiaux (214) sur le disque plan (82) et comprennent des dispositifs d'entraînement à broche filetée (110, 208, 209) qui sont en prise par l'intermédiaire de pignons coniques (108, 109) avec des roues de chant (98, 103), les roues de chant (98, 103) étant accouplées au mécanisme d'entraînement en rotation (89, 90) pour le réglage radial.

3. Machine selon la revendication 2, caractérisée en ce que les dispositifs de guidage radiaux sont constitués par des baguettes de guidage prismatiques (188) montées sur roulements à aiguilles, qui sont disposées dans des évidements radiaux (187) du disque plan (82), et que le jeu dans les dispositifs de guidage (188) peut être réglé au moyen de bandes de traction (192) recouvrant les évidements.

4. Machine selon la revendication 3, caractérisée en ce que des têtes (97) de vis de serrage (195) à axe parallèle à l'axe de rotation du disque plan (82) sont disposées dans des alésages aux extrémités des bandes de traction (192).

5. Machine selon l'une quelconque ou plusieurs des revendications 1 à 4, caractérisée en ce que le mécanisme d'entraînement en rotation du disque plan comprend un pignon (156), monté dans le boîtier (1) et qui est en prise avec une roue dentée (79) sur le disque plan (82), avec une denture interne (158) en prise par l'intermédiaire de satellites (167) montés dans une cage mobile en rotation (180, 181) avec un pignon central (124) fixé au boîtier, et en ce que le mécanisme d'entraînement en rotation destiné au réglage radial des outils à tronçonner et éventuellement des outils à chanfreiner comprend un pignon (162, 162a) monté dans le boîtier (1) et en prise avec une roue dentée (90) comprenant une denture interne (163) et montée de façon rotative sur le disque plan (82), de façon que les satellites (168) montés dans la même cage (180, 181) soient en prise avec un pignon central (130) pouvant être entraîné en rotation, le pignon central (130) pouvant être entraîné en rotation dans les deux sens par un servomoteur (175) et maintenu à l'état freiné quand il est à l'arrêt.

6. Machine selon la revendication 5, caractérisée en ce que le servomoteur (175) est constitué par un moteur à courant triphasé dans lequel est monté un dispositif incrémentiel.

7. Machine selon la revendication 6, caractérisée par un mécanisme d'entraînement à courroie dentée (131, 176, 177) entre le servomoteur (175) et le pignon central (130) qui peut être entraîné en rotation.

8. Machine selon l'une quelconque ou plusieurs des revendications 1 à 7, caractérisée en ce que la roue dentée (90, 102) montée de façon rotative sur le disque plan (82) est reliée de façon fixe en rotation avec la roue de chant (98, 103).

9. Machine selon l'une quelconque ou plusieurs des revendications 1 à 8, caractérisée en ce que des outils à tronçonner disposés radialement par paires et face à face et éventuellement des outils à chanfreiner décalés de 90° et disposés face à face par paires peuvent être réglés radialement par des roues de chant concentriques (98, 103) et des pignons coniques (108, 109) décalés radialement de façon correspondante chacun par l'intermédiaire d'un mécanisme d'entraînement indépendant au moyen chacun d'un pignon (161, 162, 162a) à denture interne (163), de satellites (168) et d'un pignon central (130).

10. Machine selon l'une quelconque ou plusieurs des revendications 1 à 9, caractérisée en ce qu'un piston annulaire (71) mobile et à commande hydraulique est monté entre le piston annulaire (15) fixé au boîtier et la douille coulissante (53) en tant que butée réglable pour la douille coulissante (53).

11. Machine selon la revendication 10, caractérisée en ce que le côté avant et le côté arrière du piston annulaire (15) fixé au boîtier est commandé par les sorties (A, B) d'un distributeur à 4/3 voies (227), en ce que le côté avant (73) du piston annulaire mobile (71) est en liaison avec l'enceinte cylindrique (58) du côté arrière du piston annulaire (15) fixé au boîtier, et en ce que le côté arrière du piston annulaire (74) fixé au boîtier du piston annulaire mobile (71) est commandé par la sortie (B) d'un distributeur à 4/2 voies (231) quand la sortie (A) est fermée.

12. Machine selon la revendication 10 ou 11, caractérisée en ce que la course du piston annulaire mobile (71) vers l'avant est limitée par une butée (75) du piston annulaire (15) fixé au boîtier et par une butée (54) de la douille coulissante (53), et la course vers l'arrière par une butée (136) de la douille coulissante (53), et en ce que la course de la douille coulissante (53) lorsque le piston annulaire mobile (71) est appliqué contre la douille coulissante (53) est limitée par amenée du côté arrière (74) du piston annulaire mobile (71) dans une position moyenne.

13. Machine selon l'une quelconque ou plusieurs des revendications 1 à 12, caractérisée par un agencement commandant le mouvement du dispositif de retenue en direction de l'axe du tube, qui est réalisé par trois unités hydrauliques à piston et cylindre (279, 280; 281) s'appuyant les unes sur les autres par leurs tiges de piston (284, 288, 296), dont l'une qui est à double effet est reliée à la sortie (A, B) d'un distributeur à 4/3 voies (306) alors que les deux autres sont à simple effet et sont reliées respectivement à la sortie (A) et à la sortie (B) d'une autre distributeur à 4/3 voies (298) qui relie dans sa position centrale les sorties (A) et (B) à la conduite de retour (301).

14. Machine selon la revendication 13, caractérisée en ce que l'unité hydraulique à piston et cylindre à double effet (281) forme l'extrémité de la chaîne, et l'unité à piston et cylindre centrale à simple effet (280) comprend un ressort de rappel (290) et une tige de piston (296) qui plonge dans le cylindre (291) de l'unité hydraulique à piston et cylindre à double effet (281).

15. Procédé pour tronçonner et chanfreiner des tubes au moyen d'au moins un outil à chanfreiner (312) et d'au moins un outil à tronçonner (313), qui sont disposés en commun de façon orbitale et à la manière de planètes autour de l'axe longitudinal central (309) du tube et peuvent être déplacés radialement par rapport à ce dernier, l'outil à chanfreiner (312) comprenant des bords de chanfreinage (317, 318, 323, 324) disposés par paires pour effectuer simultanément les chanfreins externes (319, 320) et les chanfreins internes sur les bords frontaux axialement opposés des tubes, les extrémités tronçonnées (307, 308) des tubes, après tronçonnage et réalisation des chanfreins externes (319, 320), étant déplacées relativement l'une par rapport à l'autre axialement en s'éloignant l'un de l'autre pour introduire l'outil à chanfreiner (312) en vue de la réalisation des chanfreins internes, caractérisé en ce que l'on utilise un outil à tronçonner (313) séparé de l'outil à chanfreiner (312), les deux étant déplacés radialement vers l'intérieur simultanément ou sensiblement simultanément selon des vitesses différentes, le processus de tronçonnage se terminant avant la réalisation des chanfreins externes, et en ce que pour réaliser les chanfreins internes, seule l'une des deux extrémités (307, 308) du tube est déplacée axialement, suite à quoi l'outil à chanfreiner (312) est introduit dans l'intervalle et est d'abord amené sans avance préalable de coupe axialement en direction de l'extrémité du tube qui n'est pas déplacée axialement dans la position de coupe, et en ce qu'ensuite l'extrémité du tube qui a été déplacée axialement est ramenée dans la position de coupe vers l'outil à chanfreiner (312) pour réaliser les chanfreins internes radialement à l'intérieur, et ensuite une extrémité du tube est à nouveau éloignée axialement de l'autre pour en retirer l'outil à chanfreiner (312).

16. Procédé selon la revendication 15, caractérisé en ce que l'outil à tronçonner est maintenu dans sa position de départ pendant que se déroule le mouvement pour réaliser les chanfreins internes.

17. Machine selon l'une quelconque ou plusieurs des revendications 1 à 14 pour la mise en oeuvre du procédé selon les revendications 15 et 16, au moyen d'au moins un outil à chanfreiner (312) et d'au moins un outil à tronçonner (313), qui sont montés de façon orbitale en commun à la manière de planètes autour de l'axe longitudinal central du tube et peuvent être déplacés radialement en direction l'un de l'autre, l'outil à chanfreiner (312) comprenant des bords de chanfreinage (317, 318, 323, 324) disposés par paire pour réaliser simultanément les chanfreins externes et les chanfreins internes sur les bords frontaux axialement opposés des tubes, caractérisée en ce que les extrémités des tubes peuvent être serrées fermement de façon à ne pouvoir tourner au moyen de la tête à tronçonner (36, 44, 48) et de moyens de retenue (261, 266) et déplacées axialement l'une par rapport à l'autre au moyen de l'unité hydraulique à piston et cylindre commandable (15, 53, 71) en vue du passage de l'outil à chanfreiner (312), qui est également mobile axialement par rapport à l'axe longitudinal central du tube, l'outil à chanfreiner (312) étant disposé séparément de l'outil à tronçonner (313), les deux pouvant être avancés radialement vers l'intérieur indépendamment l'un de l'autre et selon des vitesses différentes simultanément ou sensiblement simultanément, l'unité hydraulique à piston et cylindre commandable (15, 53, 71) étant associée à une extrémité (307) du tube et l'outil à chanfreiner (312) destiné à la réalisation des chanfreins internes (325, 326) pouvant être également avancé radialement vers l'extérieur.
